# EUROPEAN PATENT APPLICATION

(11) **EP 1 659 285 A2**
(43) Date of publication of application: **24.05.2006**
(21) Application number: 05025446.5
(22) Date of filing: 22.11.2005
(51) Int. Cl.: F02N 11/08, F02N 17/08

(54) **Vehicle engine starting system**

(30) Priority: 22.11.2004 JP 2004337996
(71) Applicant: Mazda Motor Corporation, Aki-gun Hiroshima 735-8670 (JP)
(72) Inventor: Hosoya, Hideki, Aki-gun Hiroshima (JP); Sugiyama, Takanori, Aki-gun Hiroshima (JP)
(74) Representative: Herrmann, Uwe

(57) **Abstract**

Disclosed is a vehicle engine starting system capable of facilitating reduction in fuel consumption and providing maximally improved response after satisfaction of a restart condition, while desirably maintaining an engine restart performance. An ECU is operable, when an automatic engine stop condition is satisfied during running of a vehicle, to shift an automatic transmission unit from a drive mode to a neutral mode at a given time in a period after the satisfaction and before interruption of fuel supply. Then, the ECU is operable, when the engine is determined to be automatically stopped, in accordance with a detection result of a crank angle sensor, and an estimated turbine speed is determined to be less than a given influential turbine speed at or at greater than which a reverse driving force from driven wheels of the vehicle causes rotation of an engine crankshaft, in accordance with an estimation result of the ECU, to shift the automatic transmission unit from the neutral mode to the drive mode.

## Description

### BACKGROUND OF THE INVENTION

### 1. FIELD OF THE INVENTION

The present invention relates to an engine starting system for automatically stopping an engine of a vehicle during a given state, such as a deceleration state of the vehicle, and then automatically starting the stopped engine.

### 2. DESCRIPTION OF THE BACKGROUND ART

In late years, as part of measures for reductions in fuel consumption and CO₂ emissions, efforts have been made to develop an engine starting system for automatically stopping an engine during an idling state, and then automatically restarting the engine when a predetermined restart condition is satisfied, for example, when a driver performs a given operation for moving a vehicle. In this relation, the applicant has proposed an engine starting system designed to supply a fuel to a specific cylinder of an engine in an automatically stopped state and ignite an obtained air-fuel mixture so as to promptly start the engine based on a torque generated by the combustion (see, for example, Japanese Patent Laid-Open Publication No. 2004-124754).

The success and failure of engine restarting in the engine starting system are determined by a piston position at a time when the engine is stopped. With a focus on this point, a technique for controlling the piston position within an adequate range for engine restarting, or controllably stopping an engine within a given crank-angle range adequate for engine restarting, has been developed, as disclosed, for example, in the JP No. 2004-124754.

In this type of engine starting system, there has also been known a technique of interrupting fuel injection during a deceleration state of a vehicle and allowing an engine to successively come into an automatically stopped state so as to provide further enhanced effect of reducing fuel consumption (see, for example, Japanese Patent Laid-Open Publication No. 07-266932).

From the viewpoint of obtaining further enhanced effect of reducing fuel consumption in the engine starting system disclosed in the JP No. 2004-124754, it is desirable to allow an engine to come into an automatically stopped state even during a vehicle running state (vehicle deceleration state) as in the system disclosed in the JP No. 07-266932.

However, if the engine starting system disclosed in the JP No. 2004-124754 is designed to allow an engine to come into an automatically stopped state during a vehicle running state as in the system disclosed in the JP No. 07-266932, a reverse driving force from driven wheels will act on an engine output shaft to cause difficulty in stopping a piston within the adequate positional range when the engine is stopped. As measures against this problem, it is contemplated to initiate the above automatic engine stop control during a vehicle running state, under the condition that an automatic transmission unit designed to be selectively shifted between a drive mode for transmitting a driving force from the engine toward the driven wheels and a neutral mode for cutting off the transmission of the driving force is in the neutral mode.

This countermeasure will however create a new problem about difficulty in quickly shifting the automatic transmission unit from the neutral mode to the drive mode when the automatically stopped engine is restarted in response to satisfaction of an engine restart condition, such as_an operation for pressing down an accelerator pedal, because the automatic transmission unit is designed to allow each of a plurality of friction elements to be selectively locked or unlocked (engaged or disengaged) according to an oil-pressure control so as to be selectively shifted between a plurality of power transmission modes, and the friction element in a released or disengaged state requires a certain time-period for being re-engaged.

### SUMMARY OF THE INVENTION

In view of the above circumstances, it is an object of the present invention to provide a vehicle engine starting system capable of achieving further enhanced effect of reducing fuel consumption and adequately restarting an engine in response to satisfaction of an engine restart condition, while desirably maintaining characteristics or an engine restarting performance of the conventional engine starting system.

In order to achieve the above object, the present invention provides an engine starting system for a vehicle, which includes stop/restart control means operable, when an engine automatic stop condition pre-determined to be satisfiable even during a running state of the vehicle is satisfied, to interrupt fuel supply to an engine having a plurality of cylinders so as to stop the engine within a given crank-angle range adequate for engine restarting, and, when an engine restart condition for restarting the engine in an automatically stopped state is satisfied, to perform combustion at least in one of the cylinders which has a piston in a state after being automatically stopped in an expansion stroke, so as to automatically restart the engine. The vehicle includes an automatic transmission unit provided with a torque converter and designed to be selectively shifted between a drive mode for transmitting a driving force toward driven wheels and a neutral mode for cutting off the transmission of the driving force. The engine starting system is characterized by comprising turbine-speed estimation means for estimating a turbine speed of a turbine of the torque converter which will occur when the automatic transmission unit currently in the neutral mode is shifted to the drive mode, and engine-speed detection means for detecting an engine speed of the engine. The stop/restart control means is operable, when the automatic stop condition is satisfied during a running state of the vehicle, to shift the automatic transmission unit from the drive mode to the neutral mode at a given time in a period after the satisfaction and before the interruption of the fuel supply, and, then when the engine is determined to be automatically stopped, in accordance with a detection result of the engine-speed detection means, and the estimated turbine speed is determined to be less than a given influential turbine speed at or at greater than which a reverse driving force from driven wheels of the vehicle causes rotation of an engine crankshaft, in accordance with an estimation result of the turbine-speed estimation means, to shift the automatic transmission unit from the neutral mode to the drive mode.

According to the engine starting system of the present invention, the stop/restart control means for controlling the automatic stop and restart of the engine is designed to, when the automatic stop condition is satisfied during a vehicle running state, shift the automatic transmission unit from the drive mode to the neutral mode at a given time in a period after the satisfaction and before the interruption of the fuel supply. Thus, even during a vehicle running state, the engine can be desirably stopped within a given crank-angle range adequate for engine restarting, by interrupting the fuel supply to the engine. Further, the stop/restart control means is designed to, when the engine is determined to be automatically stopped, in accordance with a detection result of the engine-speed detection means, to shift the automatic transmission unit from the neutral mode to the drive mode. Thus, the automatic transmission unit can be shifted to the drive mode in advance before the restart condition is satisfied. This makes it possible to eliminate a time lag which would otherwise occur in shifting the automatic transmission unit when the restart condition is satisfied in response to a re-acceleration request or the like, so as to provide enhanced response.

Generally, in an engine equipped with an automatic transmission unit including a torque converter has a characteristic in which an engine crankshaft is rotated by a reverse driving force from driven wheels only after a turbine speed is increased up to a given value or more. In the present invention, this characteristic is utilized to determine the timing of shifting the automatic transmission unit after the detection of engine stop. Specifically, the above timing of shifting the automatic transmission unit from the neutral mode to the drive mode by the stop/restart control means is set at a time when the estimated turbine speed is determined to be less than a given influential turbine speed at or at greater than which a reverse driving force from the driven wheels causes rotation of the engine crankshaft, in accordance with an estimation result of the turbine-speed estimation means. This makes it possible to effectively prevent variations in stop position of the piston to be caused by shifting of the automatic transmission unit, and maximally improve the response to the shifting while desirably maintaining the restart performance.

In the engine starting system of the present invention, considering the situation where the restart condition is satisfied in a period after the engine stop is determined and before the estimated turbine speed falls below the influential turbine speed, while the stop/restart control means may be designed to shift the automatic transmission unit at a time when the estimated turbine speed falls below the influential turbine speed or immediately after the satisfaction of the restart condition, it is preferable that the stop/restart control means is designed to perform combustion at least in one of the cylinders which has a piston in a state after being automatically stopped in an expansion stroke, regardless of the estimated turbine speed, and then shift the automatic transmission unit from the drive mode to the neutral mode.

According to this preferred embodiment, as compared to the case where the automatic transmission unit is shifted at a time the estimated turbine speed falls below the influential turbine speed, the response to the shifting can be desirably maintained. In addition, the automatic transmission unit is shifted to the drive mode after the engine is restarted. This can prevent deterioration in engine restart performance.

Further, while the engine starting system of the present invention may be designed to perform combustion in a specific one of the cylinders of the stopped engine so as to promptly start the engine based on only a torque generated by the combustion, it is preferable that the engine starting system further comprises a start assist device designed to drive the engine crankshaft using a motor, and the stop/restart control means is operable, when the restart condition is satisfied, to activate the start assist device so as to assist restarting the engine.

According to this preferred embodiment, the start assist device can assist restarting the engine. This makes it possible to reliably restart the engine so as to provide enhanced reliability of the engine restart performance.

In the engine starting system of the present invention, it is preferable that the automatic transmission unit is provided with a plurality of friction elements each adapted to be selectively placed in an engaged or disengaged state according to a fluid pressure control using oil, air or the like, and designed to be selectively shifted between the drive mode and the neutral mode according to a combination of the states of the friction elements, and the stop/restart control means is operable to allow a fluid line connected to at least a given one of the friction elements to be charged with a working fluid up to a given fluid pressure, so as to create a pre-charged state in the neutral mode (appended claim 4). More preferably, the pre-charged state includes an initial pre-charged state created by charging the fluid line with the working fluid, and a final pre-charged state created by, after the initial pre-charged state, further moving the given friction element from a disengagement position toward an engagement position so as to be located at a position just before the engagement position, wherein the automatic transmission unit shifted to the neutral mode by the stop/restart control means is in the final pre-charged state.

According to this preferred embodiment, even during the automatic stop control in the state after the automatic transmission unit is shifted to the neutral mode, the automatic transmission unit can be immediately shifted from the neutral mode to the drive mode in response to satisfaction of the restart condition.

Specifically, when the automatic transmission unit designed to be selectively shifted between the neutral mode and the drive mode according to a fluid control is shifted to the neutral mode, a fluid in the fluid line connected to one or more of the friction elements flows out thereof to reduce a fluid pressure in the fluid line, and it is likely that the fluid line has almost no fluid. In the process of shifting the automatic transmission unit from the neutral mode to the drive mode under the above condition, a fluid line connected to one or more of the friction elements to be placed in an engaged state during this shift operation has to be charged with a fluid up to a given fluid pressure necessary for an engagement operation, and then further charged with a fluid to move each of the friction elements from a release or disengagement position to a contact position with no clutch clearance (this movement includes a movement of a piston for pressing the friction element). That is, a certain time is essentially required to complete the operation for charging the fluid line with a fluid and moving the friction elements. In contrast, according to the above preferred embodiment, the fluid line can be pre-charged with a fluid, and the friction elements may be moved to an engagement position or a position just before the engagement position according to need. This makes it possible to save the time required for the above operation so as to provide enhanced response to shifting of the automatic transmission unit.

The engine starting system of the present invention can be suitably applied to the automatic transmission unit designed to create the pre-charged state in the neutral mode. Specifically, when the pre-charged state is created in the automatic transmission unit, the friction element is likely to be placed in a slight contact state or in a slip state even in the neutral mode, and the slip state involves the risk of accelerating aged-deterioration of the friction elements. In order to eliminate this risk, the automatic transmission unit in the pre-charged state, particularly in the final pre-charged state, can be shifted from the neutral mode to the drive mode, as quickly as possible.

As above, the vehicle engine starting system of the present invention has an advantage of being able to satisfy both of improvement in fuel consumption and response to re-acceleration request or the like in a balanced manner, while maintaining characteristics of the conventional engine starting system designed to stop an engine within a given crank-angle range so as to achieve enhanced combustion-based engine restart performance.

### BRIEF DESCRIPTION OF DRAWINGS

FIG. 1 is a schematic sectional view showing an engine having an engine starting system of the present invention.
FIG. 2 is an explanatory diagram showing the structure of intake and exhaust systems of the engine.
FIG. 3 is a schematic diagram showing one example of an automatic transmission unit associated with the engine starting system.
FIG. 4 is a relation chart showing one example of the relation between an operating state of friction elements and a gear position in the automatic transmission unit in FIG. 3.
FIG. 5 is a schematic diagram showing one example of an oil-pressure control circuit of an automatic transmission unit associated with an engine starting system of the present invention.
FIG. 6 is a shift map of the automatic transmission unit in the engine starting system in FIG. 5, on the basis of a vehicle speed and a throttle opening.
FIG. 7 is a relation chart showing one example of the relation between an operating state of solenoid valves and a gear position in the automatic transmission unit in FIG. 5.
FIG 8 is an explanatory graph showing temporal changes in working pressure of an oil-pressure circuit of the automatic transmission unit in FIG. 5.
FIG 9 is a block diagram showing an engine starting system according to one embodiment of the present invention.
FIG. 10 is a time chart showing changes in engine speed, throttle opening and target alternator output current during an automatic engine stop control.
FIG. 11 is a time chart showing a selected gear, a turbine speed, a vehicle speed, etc., during the engine stop control and an engine restart control.
FIG. 12 is a distribution chart showing the correlation between an engine speed and a piston stop position during the engine stop control.
FIG 13 is a time chart showing a combustion cycle during the engine restart control.
FIG 14 is a time chart showing changes in engine speed etc., during the engine restart control.
FIG. 15 is a flowchart showing an engine control process.
FIG. 16 is a flowchart showing a process of engine automatic stop and restart controls.
FIG. 17 is a flowchart showing an engine restart control process.

### DESCRIPTION OF THE PREFERRED EMBODIMENTS

With reference to the drawings, preferred embodiments of the present invention, but not limited thereto, will now be described.

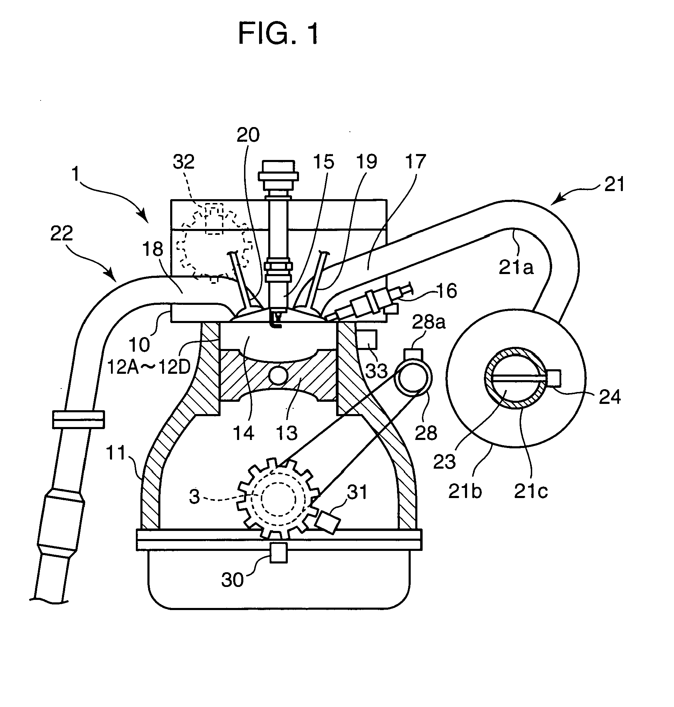

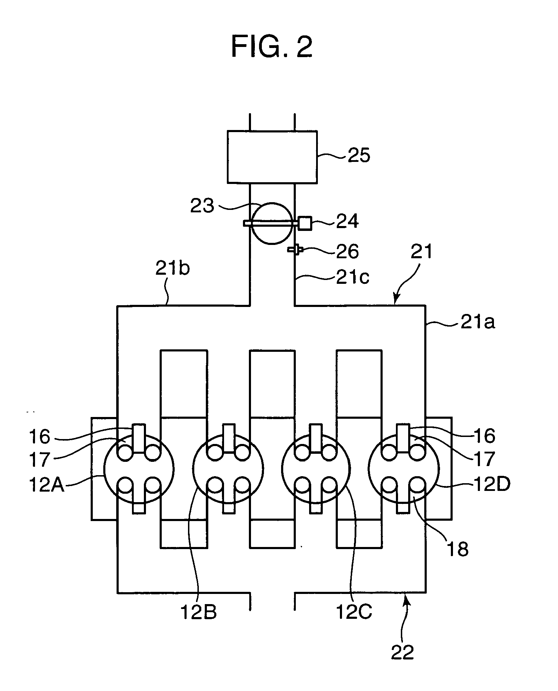

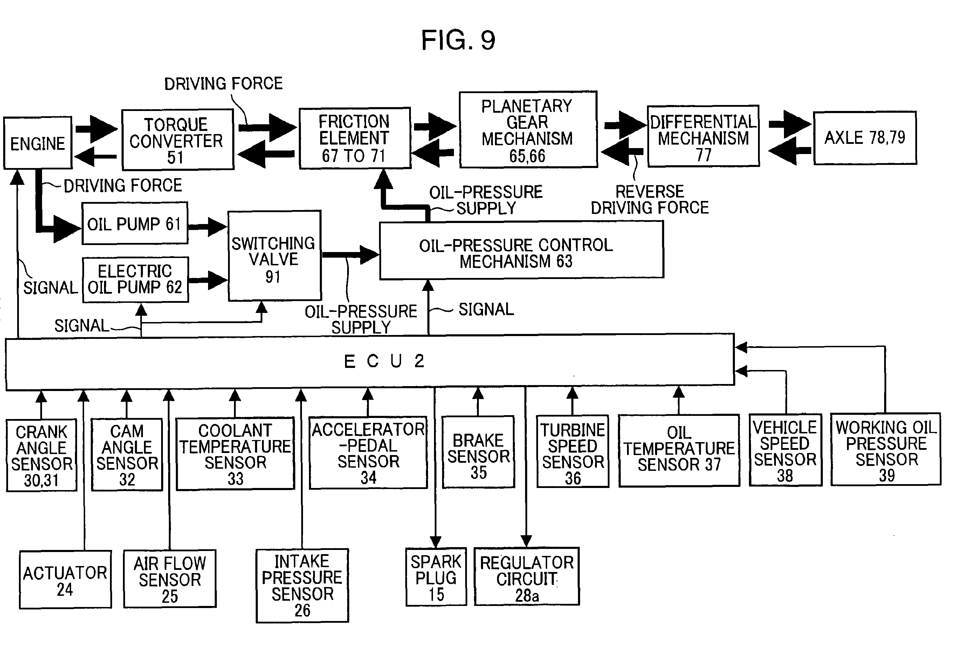

FIGS. 1 and 2 schematically show the structure of a four-stroke spark-ignition engine having an engine starting system according to one embodiment of the present invention. This engine comprises an engine body 1 including a cylinder head 10 and a cylinder block 11, and an engine control ECU 2 (see FIG. 9). The engine body 1 has a plurality of cylinders (four cylinders in this embodiment) 12A to 12D, and a piston 13 connected to a crankshaft 3 through a connecting rod is slidably fitted in each of the cylinders 12A to 12D to define a combustion chamber 14 thereabove.

The combustion chamber 14 in each of the cylinders 12A to 12D has a top wall portion provided with a spark plug 15 whose tip is exposed to the combustion chamber 14. The combustion chamber 14 also has a side wall portion provided with a fuel injection valve 16 for injecting a fuel directly into the combustion chamber 14. The fuel injection valve 16 is equipped with a built-in needle value and solenoid (not shown), and designed to be activated and opened for a time-period corresponding to a pulse width of a pulse signal entered therein so as to inject fuel in an amount proportional to the valve open period. The fuel injection valve 16 is also designed to inject the fuel toward a position adjacent to the spark plug 15. The fuel injection valve 16 is associated with a fuel supply system for supplying fuel from a fuel pump (not shown) thereto through a fuel supply passage etc., and the fuel supply system is adapted to supply fuel at a fuel pressure greater than an in-cylinder pressure in a compression stroke.

A pair of intake ports 17 and a pair of exhaust ports 18 are fluidically connected to the combustion chamber 14 in each of the cylinders 12A to 12D. Each of the intake ports 17 is equipped with an intake valve 19, and each of the exhaust ports 18 is equipped with an exhaust valve 20. The intake and exhaust valves 19, 20 are designed to be driven by a valve operating mechanism including a camshaft (not shown). As described in detail later, respective opening/closing timings of the intake and exhaust valves 19, 20 in the cylinders 12A to 12D are set to allow respective combustion cycles in the cylinders 12A to 12D to be performed with given phase differences.

An intake passage 21 and an exhaust passage 22 are fluidically connected, respectively, to the intake ports 17 and the exhaust ports 18. As shown in FIG. 2, a downstream portion of the intake passage 21 adjacent to the intake ports 17 is formed as four independently branched intake manifold passages 21a corresponding to the cylinders 12A to 12D, and respective upstream ends of the intake manifold passages 21a are fluidically connected to a surge tank 21b. A portion of the intake passage 21 on an upstream side relative to the surge tank 21b is formed as a common intake passage 21c, and intake flow rate adjusting means composed of a throttle valve 23 designed to be driven by an actuator 24 is disposed in the common intake passage 21c. Further, an air-flow sensor 25 for detecting an intake flow rate and an intake pressure sensor 26 for detecting an intake pressure (negative pressure) are disposed, respectively, on the upstream and downstream sides of the throttle valve 23.

An alternator (power generator) 28 is attached to the engine body 1 and connected to the crankshaft 3 through a timing belt or the like. The alternator 28 is designed to have an output voltage to be adjusted by controlling a current to be applied to a field coil (not shown) thereof, so as to allow an output current therefrom to be controlled at a target value corresponding to an electric load of a vehicle, a voltage of an in-vehicle battery, etc., in accordance with a control signal from the ECU 2 during a normal engine operation.

The engine is provided with a pair of first and second crank angle sensors 30, 31 for detecting a rotational angle of the crankshaft 3. An engine speed is detected based on a detection signal generated from the first crank angle sensor 30, and a rotational direction and a rotational angle of the crankshaft 3 are detected based on respective detection signals generated from the first and second crank angle sensors 30, 31 with a phase lag. These crank angle sensors 30, 31 serve as "engine-speed detection means" in the present invention.

The engine is further provided with a cam angle sensor 32 for detecting a specific rotational position of the camshaft to generate a cylinder discrimination signal for discriminating the cylinders from each other, and a coolant temperature sensor 33 for detecting an engine coolant temperature. The detection signals generated from these sensors 32, 33 are entered into the ECU 2.

As shown in FIG. 9, the ECU 2 also receives respective detection signals generated from an accelerator sensor 34 for detecting an accelerator-pedal angle corresponding to an amount of a driver's accelerator-pedal operation, a brake sensor 35 for detecting a driver's brake operation, an oil temperature sensor 37 for detecting an oil temperature of an after-mentioned automatic transmission unit 50, a vehicle speed sensor 38 for detecting a vehicle speed, and a working pressure sensor 39 for detecting a working pressure for each of a plurality of friction elements of the automatic transmission unit 50.

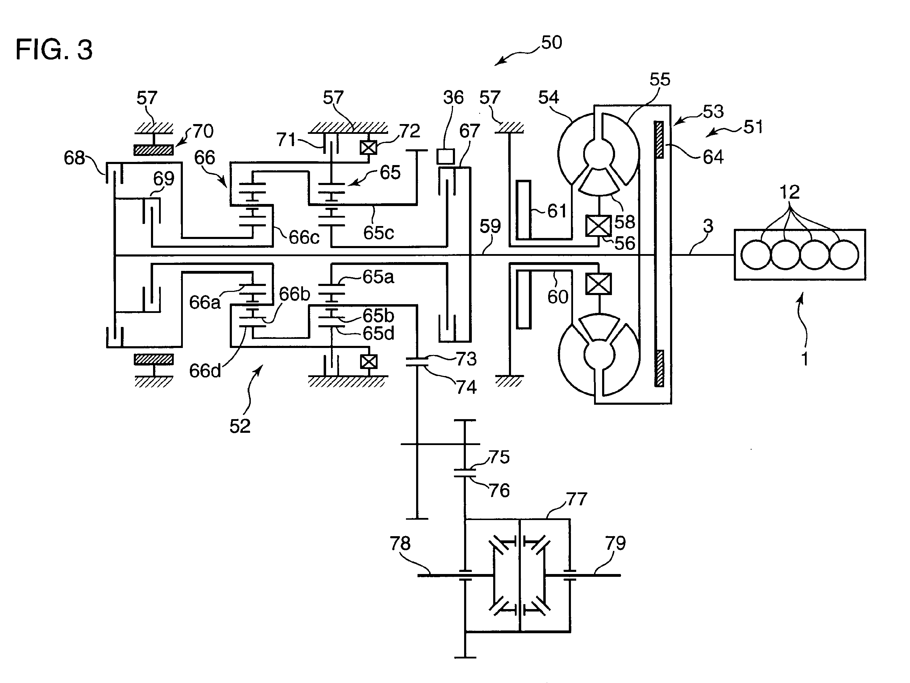

As shown in FIG. 3, the engine is connected to the automatic transmission unit 50 through the crankshaft 3 serving as an output shaft thereof. The automatic transmission unit 50 comprises a torque converter 51 connected with the crankshaft 3, and a multi-speed transmission mechanism 52 connected to a turbine shaft 59 serving as an output shaft of the torque converter 51. The automatic transmission unit 50 is designed to allow each of a plurality of friction elements contained therein 2 to be selectively locked or unlocked (engaged or disengaged) so as to be selectively shifted between a neutral mode for cutting off a transmission of a driving force from the engine toward driven wheels of the vehicle, and a drive mode for transmitting the driving force from the engine to the driven wheels.

The torque converter 51 includes a pump cover 53 connected with the crankshaft 3, a pump impeller 54 integrally formed with the pump cover 53, a turbine (turbine runner) 55 disposed in opposed relation to the pump impeller 54, and a stator 58 disposed between the pump impeller 54 and the turbine 55 and attached to a case 57 through an one-way clutch 56. A space in the pump cover 53 is filled with oil (working oil) serving as working fluid to allow a driving force of the pump impeller 54 to be transmitted to the turbine 55 through the working oil. Then, the driving force is transmitted between the turbine 55 and the multi-speed transmission mechanism 52 through the turbine shaft 59 connected with the turbine 55.

A turbine speed sensor 36 for detecting a rotational speed of the turbine 55 is fixed to the case 57 in such a manner as to be located opposed to an outer peripheral surface of a forward clutch 67 (described in detail later) adapted to be integrally rotated together with the turbine shaft 59. More specifically, the turbine speed sensor 36 is designed to have a distal end located opposed to an outer peripheral surface of a drum of the forward clutch 67, and detect periodical changes in induced voltage to be generated by rotation of the drum and resulting displacement of a plurality of spline-shaped convex/concave portions formed in the outer periphery of the drum, so as to detect a rotation number or turbine speed of the turbine 55 through a rotation number of the turbine shaft 59.

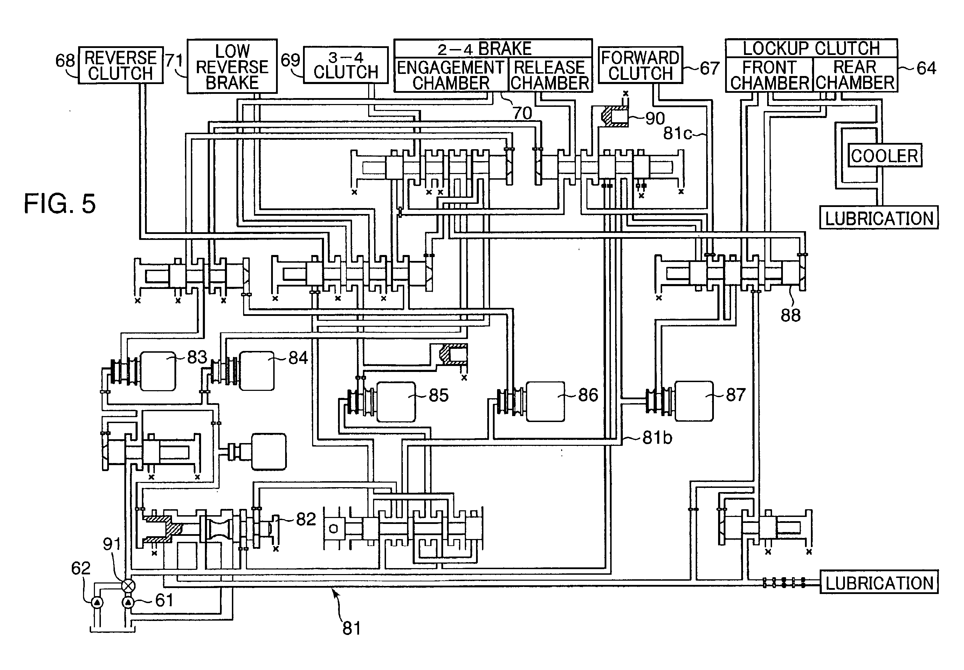

The pump impeller 54 is connected to a hollow shaft 60, and an oil pump 61 is attached to a rear end of the hollow shaft 60 (one end on the opposite side relative to the engine body 1). In addition to this pump-impeller-driven oil pump or impeller oil pump 61, the torque converter 51 is provided with a motor-driven or electric oil pump 62 (see FIG. 5), and these oil pumps 61, 62 are fluidically connected to an after-mentioned oil-pressure control mechanism 63. According to control signals from the ECU 2, various oil-pressure controls, such as switching between the impeller oil pump 61 and the electric oil pump 62, switching between a plurality of oil lines (fluid lines) in the oil-pressure control mechanism 63, and setting of a line pressure, are performed to allow each of the friction elements 67 to 71 to be selectively locked or unlocked (engaged or disengaged), as described in detail later.

The electric oil pump 62 provided in addition to the impeller oil pump 61 serves as a means to ensure a line pressure when it is difficult to supply a desired line pressure only by the impeller oil pump 61 due to a relatively low engine speed during engine stop or in an initial stage of engine start. From this standpoint, the timing of switching between the impeller oil pump 61 and the electric oil pump 62 is determined.

The torque converter 51 also includes a lockup clutch 64 disposed between the pump cover 53 and the turbine 55 and adapted to connect the crankshaft 3 directly to the turbine 55 through the cover 53. This lockup clutch 64 is fluidically connected to the impeller oil pump 62 and the electric oil pump 62 through the oil-pressure control mechanism 63, and designed to be selectively placed in an engaged or disengaged state according to an on-off control of various solenoid valves incorporated in the oil-pressure control mechanism 63.

The multi-speed transmission mechanism 52 includes first and second planetary gear mechanisms 65, 66, and a plurality of engagement elements (a plurality of friction elements 67 to 71, such as clutches and brakes, and a one-way clutch 72) for switching between a plurality of power transmission lines including the planetary gear mechanisms 65, 66. Each of the engagement elements is designed to be selectively locked or unlocked depending on shift ranges (D range, N range, R range, etc.) so as to shift between a forward mode, a neutral mode and a reverse mode.

Each of the first and second planetary gear mechanisms 65, 66 comprises a sun gear 65a/66a, a plurality (e.g. three) of planetary gears 65b/66b disposed around the sun gear 65a/66a, a carrier 65c/66c supporting the planetary gears 65b/66b, and a ring gear 65d/66d disposed to surround the planetary gears 65b/66b and engaged therewith. The ring gear 65d of the first planetary gear mechanism 65 is connected to the carrier 66c of the second planetary gear mechanism 66, and the carrier 65c of the first planetary gear mechanism 65 is connected to the ring gear 66d of the second planetary gear mechanism 66, so as to allow the planetary gear mechanisms 65, 66 to be interlocked with one another.

The friction elements include a forward clutch 67 interposed between the turbine shaft 59 and the sun gear 65a of the first planetary gear mechanism 65, a reverse clutch 68 interposed between the turbine shaft 59 and the sun gear 66a of the second planetary gear mechanism 66, a 3-4 clutch 69 interposed between the turbine shaft 59 and the carrier 66c of the second planetary gear mechanism 66, a 2-4 brake 70 for immobilizing the sun gear 66a of the second planetary gear mechanism 66, and a low reverse brake 71 interposed in parallel between each of the planetary gear mechanisms 65, 66 and the case 57. The one-way clutch 72 is provided as a means to allow each of the carrier 65c and the ring gear 66d to be rotated in one direction (in a driving direction of the crankshaft 3). Thus, the one-way clutch 72 is placed in an unlocked state in response to a rotation in the above one direction, and in a locked state in response to a rotation in the reverse direction. These engagement elements 67 to 72 are locked or unlocked selectively and combinationally to change or disconnect a power transmission line to be connected to an output gear 73.

Then, when the output gear 73 is rotated, a driving force will be transmitted toward the driven wheels, or to right/left axles 78, 79 through driving gears 74, 75, 76 and a differential mechanism 77.

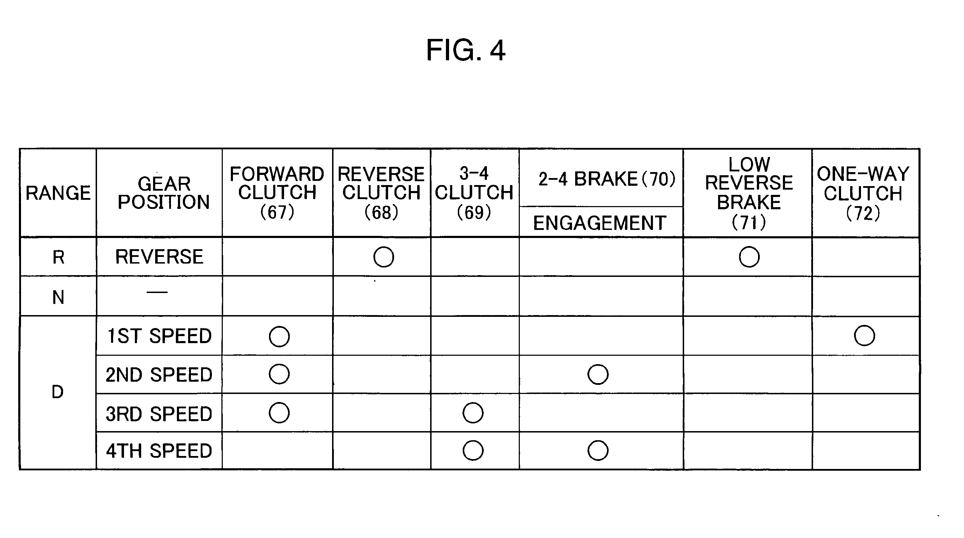

The relationship between each locked/unlocked state of the engagement elements 67 to 72 and each gear position is shown in FIG. 4. In FIG. 4, the mark o indicates that each of the engagement elements 67 to 72 is in an engaged or locked state, and the blank indicates that each of the engagement elements 67 to 72 is in a disengaged or unlocked state. Specifically, in the R range, the reverse clutch 68 and the low reverse clutch 71 are in the engaged state. In the N range, all of the engagement elements 67 to 72 are in the disengaged or unlocked state. Further, in a 1st-speed gear position of the D range, the forward clutch 67 is in the engaged state, and the one-way clutch 72 is in the locked state. In a 2nd-speed gear position, each of the forward clutch 67 and the 2-4 brake 70 are in the engaged state. In a 3rd-speed gear position, each of the forward clutch 67 and the 3-4 clutch 69 are in the engaged state. In a 4th-speed gear position, each of the 3-4 clutch 69 and the 2-4 brake 70 are in the engaged state.

As with the lockup clutch 64, each of the friction elements 67 to 71 is fluidically connected to the built-up oil pump 61 and the electric oil pump 62 through the oil-pressure control mechanism 63 (see FIG. 5). According to control signals from the ECU 2, after-mentioned first and second shift solenoid valves 83, 84 and first to third duty solenoid valves 85 to 87 are activated to switch between the oil lines and change the oil pressure so as to lock or unlock each of the friction elements 67 to 71.

Specifically, the oil-pressure control mechanism 63 includes an oil-pressure control circuit as shown in FIG. 5. This oil-pressure control circuit is fluidically connected to the impeller oil pump 61 and the electric oil pump 62, and an initial pressure is supplied from the pumps 61, 62 thereto. The oil-pressure control mechanism 63 has a group of lines 82 (oil lines) extending from the pumps 61, 62 to each oil-pressure chambers (not shown) the friction elements 67 to 71, a regulator valve 82 interposed in one of the lines 81 at a position on a downstream side of the pumps 61, 62 to regulate a line pressure, first and second shift solenoid valves 83, 84 (hereinafter referred to as "first SV and second SV" for brevity) for turning on/off various valves for switching between two of the lines 81 fluidically connected to pumps 61, 62, and first to third duty solenoid valves 85 to 87 (hereinafter referred to as "first DSV, second DSV and third DSV" for brevity) for regulating a working pressure in accordance with a duty value sent from the ECU 2. Each of the first and second SVs 83, 84 and the first to third DSVs 85 to 87 is formed as a three-way valve. Further, a switching valve 91 is interposed in an oil line fluidically connecting between the pumps 61, 62 and the line group 81. The ECU 2 controls the switching value 91 in such a manner as to switch oil supply sources between the impeller oil pump 61 and the electric oil pump 62.

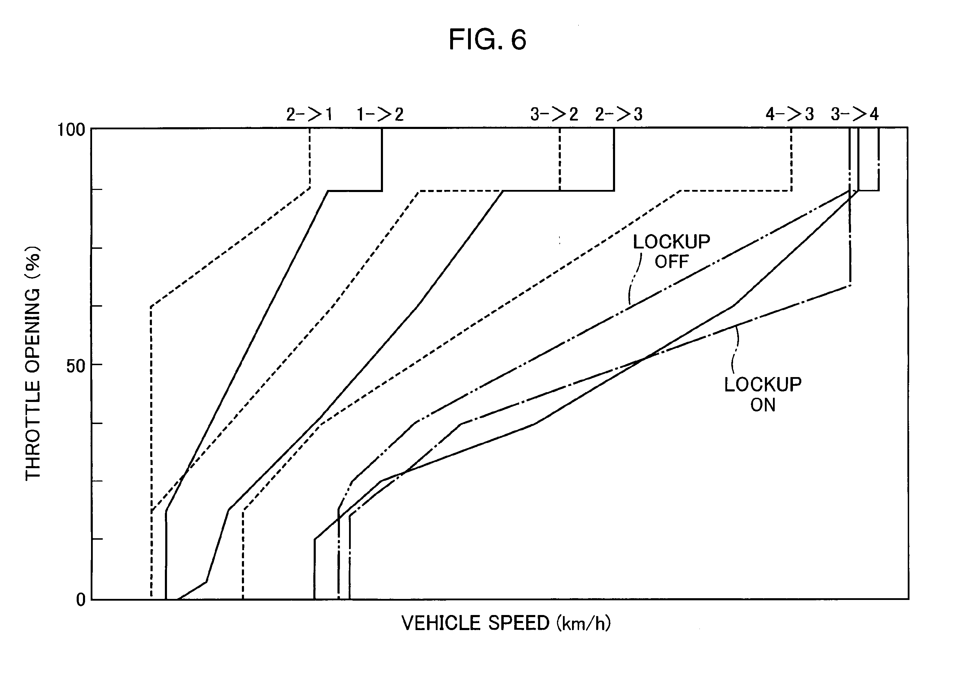

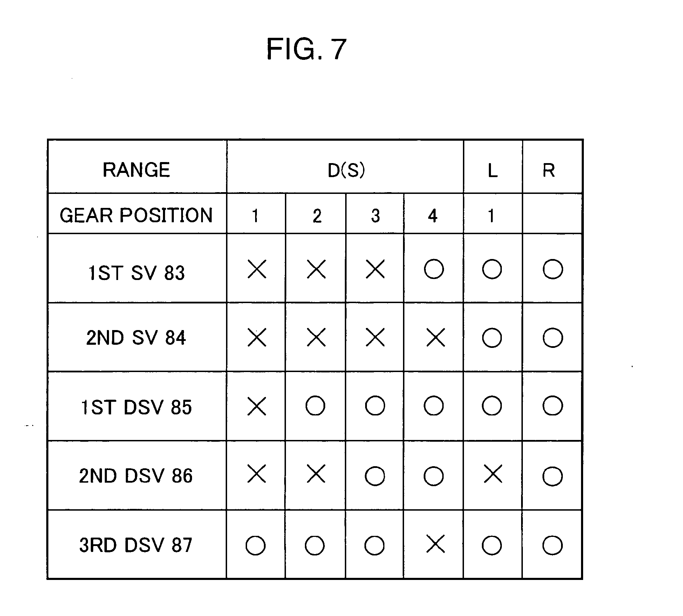

The ECU 2 is operable to activate the valves in accordance with various parameters including vehicle speed, throttle opening, engine speed and turbine speed, and selectively lock or unlock the friction elements 67 to 71 so as to shift the automatic transmission unit 50 between the plurality of gear positions to allow one gear position suitable for a current vehicle speed etc., to be selected automatically or depending on shift lever positions. FIG. 6 shows a shift map of the automatic transmission unit 50 on the basis of a vehicle speed and a throttle opening. FIG 7 shows a combination of ON/OFF states of the solenoid valves in each of the gear positions. In FIG. 7, the mark ○ indicates that each of the first and second SVs 82, 83 is in an ON state, and each of the first to third DSVs 84 to 86 is in an OFF state, and that each of these valves is positioned to fluidically connect between an upstream line and an downstream line so as to supply the initial pressure to the downstream line. The mark x indicates that each of the first and second SVs 82, 83 is in an OFF state, and each of the first to third DSVs 84 to 86 is in an ON state, and that each of these valves is positioned to block the upstream line and drain oil in the downstream line.

As one example, an operation of the oil-pressure control mechanism 63 in the state when the 1st-speed gear position is selected will be described below. As shown in FIGS. 5 and 7, only the third DSV 87 is activated or turned off to form a working pressure using an upstream line pressure as an initial pressure, and this working pressure is supplied to a lockup control valve 88 through a line 81b. At this moment, a spool of the lockup control valve 88 is positioned on the right side to further supply the working pressure to an oil-pressure chamber of the forward clutch 67 as a forward clutch pressure (working pressure) through a forward clutch line 81c. Thus, the forward clutch 67 is engaged.

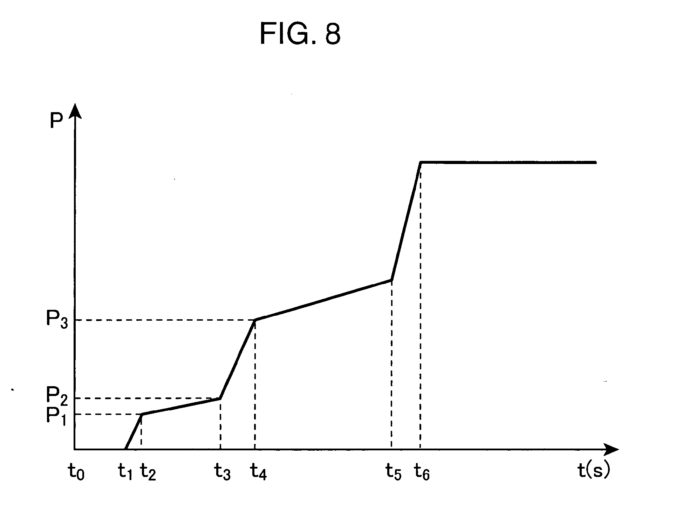

With reference to FIGS. 5 and 8, temporal changes in working pressure of the forward clutch 67 will be described below together with an operation of the forward clutch. Only the third DSV 87 is firstly activated or turned off to supply the working oil to the downstream line 81b of the third DSV 88 and the forward clutch line 81c. At Time t₁ when the lines 81b, 81c are filled with the working oil, an oil pressure in each of the lines 81b, 81c, or a working pressure of the forward clutch 67, is increased. At Time t₂ when this working pressure reaches a predetermined value P₁, a piston (not shown) of the forward clutch 67 in the disengaged state starts moving toward an engagement direction against a return spring (not shown). Then, when the working pressure reaches a predetermined value P₂, and the forward clutch 67 is moved to a contact position with zero clearance (Time t₃ in FIG. 8), an increasing rate of the working pressure becomes higher due to restriction on the movement, and the forward clutch 67 is gradually shifted from a slip state to a state where a transmittable driving force becomes higher. Then, at Time t₄ when the working pressure reaches a predetermined value P₃, an accumulator 90 is activated to provide a lower increasing rate of the working pressure so as to allow the engagement state to be continued while suppressing a rapid torque change (shock). Then, before Time t₅ when the accumulator 90 is filled with oil, the forward clutch 67 is placed in a fully engaged state. The working pressure is further increased to obtain a large engagement force sufficient to cope with variation in transmittable driving force due to a rapid torque change. If any gear position other than the 1st-speed gear position is selected, the automatic transmission unit 50 will operate as in the conventional unit.

The automatic transmission unit is designed such that, when the ECU 2 controls the oil-pressure control mechanism 63 to shift the automatic transmission unit 50 to a neutral mode where the transmission of a driving force toward the driven wheels is cut off, each of the friction elements 67 to 71 is placed in a state just before the engagement state, or in a pre-charged state. Specifically, while this type of automatic transmission unit is generally designed to supply a working pressure generated in an oil-pressure control circuit to an oil pressure chamber of a friction element during a gear shift operation or during an engagement operation to shift between gear positions, a working oil is likely to flow out of lines of the oil-pressure control circuit and the oil pressure chamber of the friction element to cause a reduced working pressure, even if a working pressure is generated just after a gear shift operation to supply the working pressure to the oil pressure chamber of the friction element. Thus, during the gear shift operation, such working oil is used for filling the lines and the oil pressure chamber and moving the friction element from a disengagement position to an engagement position using the working pressure. This causes a problem about occurrence of a time delay relative to a predetermined time-period or a delay in the operation for engaging the friction element.

That is, in FIG. 8, the process of initially supplying the working oil at Time t₁, achieving zero clearance at Time t₃ and finally achieving the fully engaged state of the clutch, essentially requires a certain time. Thus, a certain delay occurs before the friction element is placed in the fully engaged state after the oil-pressure control mechanism 63 receives a shift signal of the automatic transmission unit 50, and the response to an acceleration request will be undesirably deteriorated.

In this embodiment, when the automatic transmission unit 50 is shifted to a neutral mode by the ECU 2, and each of the friction elements 67 to 71 is in a released or disengaged state, at least during the automatic engine stop control, a working pressure is supplied from the electric pump 62, in such a manner that a working pressure for at least a given one of the friction elements 67 to 71 is increased up to a pre-charge pressure Pp to allow the given friction element to be moved from a given disengagement position toward a given engagement position, and placed in a slip state (just before the fully engaged state) which is still insufficient to transmit a driving force. That is, the automatic transmission unit 50 is designed to be placed in a pre-charged state capable of eliminating the time-period for rising the working pressure (the period from Time to to Time t₂), and the time-period for moving the given friction element (the period from Time t₁ to Time t₃).

As one example, a pre-charged state of the forward clutch 67 will be described below with reference to FIGS. 5 and 8. In an operation for achieving the pre-charged state in the forward clutch 67, the ECU 2 controls the third DSV 87 in such a manner that a working pressure is adjusted at the pre-charge pressure Pp. In this embodiment, this pre-charge pressure Pp is set to be the working pressure P₂ at which the forward clutch 67 is moved approximately to the engagement position and placed in the slip state. Alternatively, the pre-charge pressure Pp is set to be a working pressure at which the forward clutch 67 is located at a position slightly displaced toward the disengagement position relative to the engagement position, or a working pressure slightly less than the working pressure P₂. In view of reliably preventing undesirable movement of the piston 13, the pre-charge pressure Pp preferably set to have a value slightly less than the working pressure P₂.

In this embodiment, the pre-charged state includes an initial pre-charged state created by filling the lines 81 fluidically connected to the friction elements 67 to 71 with a working oil, or a stage where the line 81b in the aforementioned case of the forward clutch 67 is filled or charged with a working oil up to the predetermined working pressure P₁ (to to t₂ in FIG. 8), and a final pre-charged state created by, after the initial pre-charged state, further moving the friction elements 67 to 71 from the disengagement position toward the engagement position so as to be located at a position just before the engagement position (P₁ < Pp = P₂) or a stage where the line 81b in the above case is further filled or charged with the working oil to increase the working pressure up to the predetermined working P₂ (t₂ to t₃ in FIG. 8). In this embodiment, at least one of the friction elements 67 to 71 is placed in the final pre-charged state.

The ECU 2 comprises a computer including a CPU, a ROM and a RAM. Specifically, the CPU executes a program pre-stored on the ROM (or RAM) to perform various vehicle controls. As shown in FIG. 9, in response to receiving signals from the sensors 25, 26, 30 to 34, ECU 2 is operable to send a fuel-injection-amount control signal and a fuel-injection-timing control signal to each of the fuel injection valves 16, and send an ignition timing control signal to each of the spark plugs 15. ECU 2 is also operable to send a throttle opening control signal and an output current control signal, respectively, to the actuator 24 of the throttle valve 23 and a regulator circuit 28a of the alternator 28. Further, in response to receiving signals from the sensors 25, 26, 30 to 39, ECU 2 is also operable to send to the switching valve 91 a signal for switching initial-pressure supply sources of the oil-pressure control mechanism 63 between the impeller oil pump 61 and the electric oil pump 62, and send a signal for regulating a working pressure in each of the friction elements 67 to 71 to the oil-pressure control valve 63 (i.e. the solenoid valves etc, included therein).

Further, ECU 2 is operable, when a given engine automatic stop condition pre-determined to be satisfiable not only during idling in a stop state of the vehicle but also during a running state of the vehicle is satisfied, to interrupt fuel supply so as to automatically stop the engine, and, when a predetermined engine restart condition is satisfied based on an occupant's accelerator-pedal operation etc., during the engine stop control or after automatic stop of the engine, to automatically restart the engine by means of combustion energy of the engine. In this embodiment, a plural number of the engine stop conditions are set up, and the ECU 2 is operable to automatically stop the engine only if all of the conditions are satisfied. Further, a plural number of the restart conditions are set up, and the ECU 2 is operable to automatically restart the engine only if one or more of the conditions are satisfied. In this case, the number of conditions to be satisfied depends on the contents thereof.

Specifically, as to the engine restart control, the ECU 2 is operable to allow the cylinder 12 having a piston 13 in the state after being stopped in a compression stroke when the engine is automatically stopped (hereinafter referred to as "stopped-in-compression-stroke cylinder": when it is necessary to discriminate the remaining cylinders from each other, each stroke at a time of the automatic engine stop will be appended on the head of "cylinder") to perform combustion for causing a reverse engine rotation or for moving the above piston 13 downward and moving a piston 13 of a stopped-in-expansion-stroke cylinder 12 upward so as to increase an in-cylinder pressure of the stopped-in-expansion-stroke cylinder 12, and then inject fuel into the stopped-in-expansion- stroke cylinder and ignite an obtained air-fuel mixture so as to restart the engine while increasing combustion energy in the stopped-in-expansion-stroke cylinder 12 and ensuring a sufficient stroke length of the stopped-in-expansion-stroke cylinder 12.

When the engine is restarted based on only combustion energy, it becomes critical how to maximize the combustion energy in the stopped-in-expansion-stroke cylinder 12. In this view, it is required to stop the piston 13 within a given range at the time of the engine stop so as to ensure an adequate volume of air for combustion in each of the stopped-in-compression-stroke cylinder 12C and the stopped-in-expansion-stroke cylinder 12. Specifically, , if the piston 13 can be stopped at a position falling within a given range slightly closer to a bottom dead center (BDC) relative to a stroke midpoint on the basis of the stopped-in-expansion-stroke cylinder 12 where a crank angle after the compression top dead center (TDC) is 90°CA, for example, a range where a crank angle after the compression TDC is in the range of 100 to 120°CA, a given volume of air will be ensured in the stopped-in- compression-stroke cylinder 12. This makes it possible to achieve the slight reverse engine rotation based on an initial combustion in the stopped-in-compression-stroke cylinder 12 and ensure sufficient combustion energy in the stopped-in-expansion-stroke cylinder 12.

While various specific techniques are contemplated to control a stop position of the piston 13 in the process of automatic engine stop control, the engine starting system according to this embodiment employs one technique of controlling an opening of the throttle valve 23 to adjust a compressive reactive force due to air in a compression-stroke cylinder and an expansion-stroke cylinder at a time of automatic engine stop, and further controlling an output current (generated electricity) of the alternator 28 during the automatic engine stop control in such a manner that an engine speed is finely adjusted through a resistance of the crankshaft 3 to allow an engine speed Ne after interruption of the fuel injection to be reduced along a predetermined reference curve, for example, obtained experimentally in advance, so as to control the stop position of the piston 13.

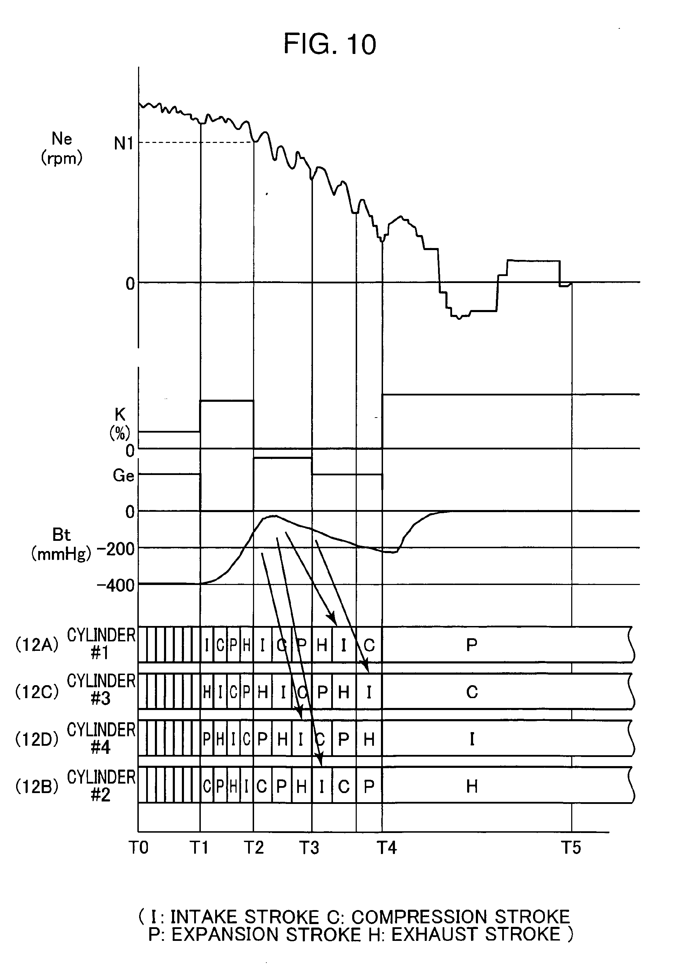

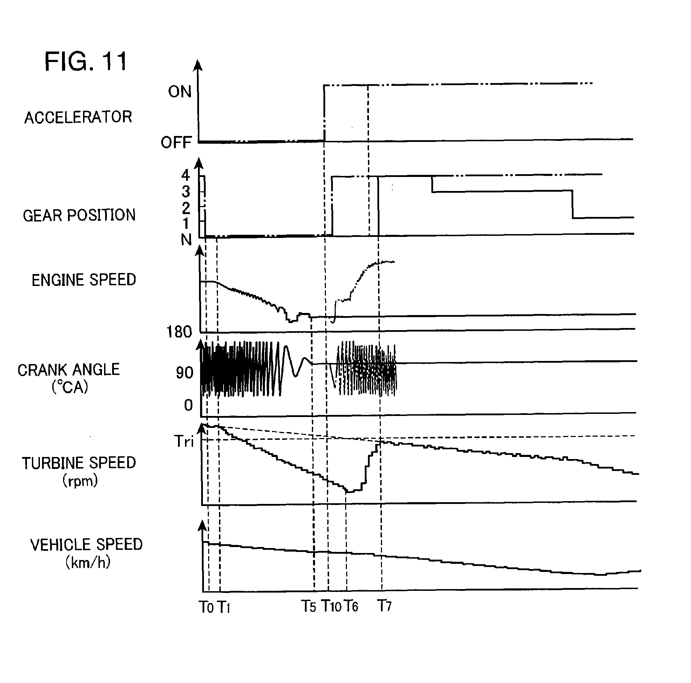

Specifically, as shown in FIGS. 10 and 11, the ECU 2 is operable, at Time to when the automatic engine stop conditions are satisfied, to disengage all of the friction elements 67 to 71 to shift the automatic transmission unit 50 from a drive mode (D range in this embodiment) to a neutral mode (N range in this embodiment). In the neutral mode during this automatic engine stop control (in the period from satisfaction of the automatic stop conditions to satisfaction of the restart condition), a working pressure is set to be the pre-charge pressure Pp, and thereby each of the friction elements 67 to 71 is in the pre-charged state. In this manner, the automatic transmission unit 50 is shifted to the neutral mode, so that adverse affects of a reverse driving force from the driven wheels can be eliminated. In addition, the automatic transmission unit 50 in the neutral mode is placed in the pre-charged state. This makes it possible to omit the period between Time t₀ and Time t₃ in FIG 8 even when the restart condition is satisfied during the engine stop control, so as to provide enhanced restart response.

Then, the ECU 2 is operable, when each of the engine speed Ne and a boost pressure Bt falls within a given range allowing the control of stopping the piston 13 within the given adequate range to be adequately performed, at Time T1 when a given time has elapsed after stabilizing the opening of the throttle valve 23 at 15%, to interrupt the fuel injection to the cylinders 12. When the fuel injection is interrupted at Time T1, kinetic energy of the crankshaft 3 etc., is consumed by mechanical loss due to frictional resistance and pumping loss in the cylinders 12A to 12D. Then, the engine will be stopped after the crankshaft 3 of the engine is rotated several times by an inertia force, for example, after having a compression TDC about 10 times when the engine is a 4-cylinder 4-stroke engine.

As described above, a stop position of this position is determined approximately by the balance between respective compressive reaction forces in the stopped-in-compression-stroke cylinder 12C and the stopped-in-expansion-stroke cylinder 12. Moreover, the stop position is affected by an engine frictional resistance etc., and further varied depending on an engine rotational inertia force or the engine speed Ne at Time T4 when the piston passes through the last compression TDC before the engine stop

Thus, in order to stop the piston 13 of the expansion-stroke cylinder 12A (or a cylinder to be in an expansion stroke when the engine is automatically stopped can be stopped) within the adequate range for restart of the engine, it is firstly required to adjust an intake air volume for each of the expansion-stroke cylinder 12A and the compression-stroke cylinder 12C in such a manner that respective compressive reaction forces in the expansion-stroke cylinder 12A and the compression-stroke cylinder 12C are increased up to a sufficiently high value, and the compressive reaction force in the expansion-stroke cylinder 12A becomes greater than that in the compression-stroke cylinder 12C by a given value or more.

For this purpose, in this embodiment, at Time T1 when the fuel injection is interrupted, an opening K of the throttle valve 23 is set to be a larger value (e.g. about 30% of a full throttle opening) so as to supply a given volume of air to each of the expansion-stroke and compression-stroke cylinders 12A, 12C. Then, at Time T2 when it is detected that the engine speed Ne is reduced to a predetermined reference speed N1 (e.g. about 790 rpm) or less, the throttle valve 23 is closed, or the opening K is reduced, to adjust the above intake-air volume.

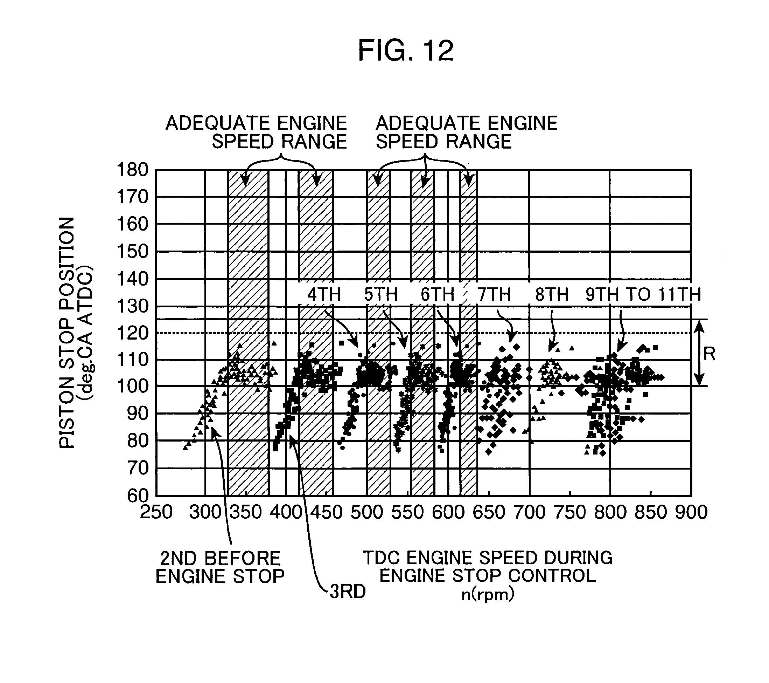

As an experimental test about the piston stop position, after interrupting the fuel injection at Time T1 when the engine speed Ne is reduced to a predetermined speed, a top dead center (TDC) engine speed ne at a time when the piston 13 in each of the cylinders 12A to 12D rotated by an inertia force passes through a compression TDC was measured while maintaining a relatively large opening of the throttle valve opening 23 for a predetermined time-period. Further, a piston position of the expansion-stroke cylinder 12A at a time of stop of the engine was checked. Form the result of this test, it was proven that, when each of the sixth to second TDC engine speeds to the last TDC engine speed just before stop of the engine falls within a range indicated by the hatched lines in FIG. 12, the stop position of the above piston 13 falls within the adequate range for restart of the engine (100 to 120°CA after a compression TDC). Thus, the ECU 2 is operable to, at Time T3 when the TDC engine speed ne falls within a given range, set a target output current Ge of the alternator 28, for example, to be zero, at Time T1 when the fuel injection is interrupted, and the target output current Ge of the alternator 28 is increased to a predetermined initial value, at Time T2 when the engine speed Ne is reduced to the reference speed N1, so as to maintain the engine speed Ne at a value allowing the piston 13 to be stopped within the adequate range, and reduce the target output current Ge of the alternator 28 to a value corresponding to a reduction rate of the engine speed Ne, so that a rotational resistance of the crankshaft 3 is adjusted to change an external load of the engine in proportion to the reduction rate of the engine speed Ne so as to reduce the engine speed Ne along a the experimentally predetermine test.

The aforementioned operations of the ECU 2 during the automatic engine stop control can be organized as follows. In the automatic engine stop control, the ECU 2 is operable to control the opening of the throttle valve 23 so as to adjust a compressive reactive force due to air in a compression-stroke cylinder 12A and an expansion-stroke cylinder 12C at a time of automatic engine stop, and further control an output current of the alternator 28 during the automatic engine stop control in such a manner that an engine speed is finely adjusted through a resistance of the crankshaft 3 to allow the engine speed Ne after interruption of the fuel injection to be reduced along a predetermined reference curve, for example, obtained experimentally in advance, so as to stop the piston 13 at a position falling within a given adequate range .

In this type of engine starting system, it is required to, in response to satisfaction of a predetermined restart condition, quickly restart an engine to allow the engine to cope with re-acceleration of a vehicle. Thus, it is desirable that the automatic transmission unit 50 sifted to the neutral mode during an engine stop control is shifted from the neutral mode to the drive mode after the engine is automatically stopped, regardless of whether the restart condition is satisfied, to stand ready to respond to satisfaction of the restart condition. However, if the automatic transmission unit 50 is shifted to the drive mode during a vehicle running state, a reverse driving force can be transmitted from the axles 78, 79 to the turbine 55 through the multi-speed transmission mechanism 52. Then, the reverse driving force acts on through the pump impeller 54 through the working oil and then acts on the crankshaft 3. This reverse driving force is likely to undesirably move the aforementioned piston 13 which has been stopped within the given adequate range.

In order to provide enhanced response to satisfaction of the restart condition, particularly, to re-acceleration request, the engine starting system according to this embodiment utilizes the characteristic that, in the automatic transmission unit 50 including the torque converter 51, the engine crankshaft 3 is rotated by a reverse driving force from the driven wheels only after the rotational speed or turbine speed of the turbine 55 is increased up to a certain level of value Tri (hereinafter referred to as "influential turbine speed").

Specifically, the ECU 2 is operable to calculate an estimated value of turbine speed (hereinafter referred to as "estimated turbine speed Tre") of the turbine 55 of the torque converter 51 which will occur when the automatic transmission unit 50 currently in the neutral mode is shifted to the drive mode. Then, the ECU 2 is further operable, when the engine is determined to be automatically stopped, in accordance with a detection result of the crank angle sensors 30, 31, and the estimated turbine speed Tre is determined to be less than the influential turbine speed Tri, to shift the automatic transmission unit 50 from the neutral mode to the drive mode. Thus, the ECU 2 serves as turbine-speed estimation means in the present invention.

More specifically, the ECU 2 is operable, when the engine is determined to be automatically stopped, in accordance with a detection result of the crank angle sensors 30, 31, to detect a vehicle speed through the vehicle sensor 38 at certain time intervals in a period from Time T5 of the automatic engine stop until satisfaction of the restart condition. Then, for example, given that a shift signal for shifting the automatic transmission unit 50 from the neutral mode to the drive mode is generated at Time T6, the ECU 2 is operable to calculate an estimated turbine speed Tre which will be caused by a reverse driving force transmitted from the axles 78, 79, at Time T7 when the above shift operation is completed to allow the friction elements 67 to 71 to be placed in the engaged state capable of transmitting a driving force. Specifically, the estimated turbine speed Tre is calculated in the ECU 2 by determining a deceleration value in accordance with a vehicle speed detected by the vehicle speed sensor 38, selecting a gear position corresponding to the detected vehicle speed in accordance with the map in FIG. 6, and assigning to a given mathematical formula the detected vehicle speed, the determined deceleration value, a gear ratio in the selected gear position and other pre-entered values, such as a tire size and a gear ratio of the differential mechanism 77.

The influential turbine speed Tri is varied depending on the structure of an automatic transmission unit 50, etc. Thus, the influential turbine speed Tri is experimentally determined in advance, and stored in the ECU 2. In this embodiment, the influential turbine speed Tri is set at 1200 rpm which is greater than an idling speed (650 rpm in the D range).

The ECU 2 is operable to stand ready to shift the automatic transmission unit 50, until the estimated turbine speed Tre becomes less than the influential turbine speed Tri, and, when the estimated turbine speed Tre falls below the influential turbine speed Tri (estimated turbine speed Tre < influential turbine speed Tri), to shift the automatic transmission unit 50 from the neutral mode (N range) to the drive mode (Drive range).

In this embodiment, the automatic transmission unit 50 is placed in the pre-charged state in which each of the friction elements 67 to 71 is in the slip state having an approximately zero clearance. Thus, the friction elements 67 to 71 are likely to generate some heat. Therefore, if the automatic transmission unit 50 is shifted from the neutral mode in the pre-charged state to the drive mode at the earliest possible timing, the durability of the friction elements 67 to 71 can be ensured.

Then, the ECU 2 is operable, when any one of the predetermined restart conditions is satisfied during the automatic engine stop state, and the piston 13 of the stopped-in-expansion-stroke cylinder 12A is stopped within the adequate range, to perform an initial combustion in the stopped-in- compression-stroke cylinder 12C so as to cause a reverse engine rotation for increasing an in-cylinder pressure of the stopped-in-expansion-stroke cylinder 12A, and then to inject a fuel into the stopped-in-expansion-stroke cylinder 12A having the increased in-cylinder pressure, and ignite an obtained air-fuel mixture so as to automatically restart the engine based on resulting combustion.

Given that the restart condition is satisfied at Time 10 in FIG. 11, before the automatic transmission unit 50 is shifted from the drive mode to the neutral mode. In this case, the ECU 2 is operable to shift the automatic transmission unit 50 from the neutral mode to the drive mode regardless of the estimated turbine speed Tre, after performing combustion in the stopped-in-compression-stroke cylinder 12C and then performing combustion the stopped-in-expansion-stroke cylinder 12A. Specifically, the ECU 2 is operable to send the shift signal to the automatic transmission unit 50 when a given time (e.g. 0.05 second) has elapsed after performing the initial combustion for engine restart, so as to allow the automatic transmission unit 50 to be shifted to the drive mode at a given timing after the operation for reverse engine rotation is completed, and the engine is placed in a normal state. In the above situation where the automatic transmission unit 50 is shifted to the drive mode after performing the initial combustion for engine restart in the stopped-in-compression-stroke cylinder 12A, if the estimated turbine speed Tre is greater than the influential turbine speed Tri (as indicated by the two-dot chain line in FIG 11), a reverse driving force will act on the crankshaft 3. However, the combustions in the stopped-in-compression-stroke cylinder 12C and the stopped-in-expansion-stroke cylinder 12A are performed before the reverse driving force acts on the crankshaft 3 to prevent deterioration in restart performance due to movement of the piston 13 caused by the reverse driving force arising in conjunction with the shift of the automatic transmission unit 50. In addition, the reverse driving force acts on the crankshaft 3 in a period where a restarting state is instable or in a period before a piston 13 of a stopped-in-intake-stroke cylinder 12D initially passes through a compression TDC. Thus, this reverse driving force can be utilized as a force for assisting the engine restart, to reliably restart the engine. Further, the reverse driving force serving as a restart assisting force acts after the operation for reverse engine rotation. Thus, the operation for reverse engine rotation can be performed without any interference of the reverse driving force to effectively increase the in-cylinder pressure in the stopped-in-expansion-stroke cylinder 12A.

As described above, the engine restart control is performed as follows both after and before the shift of the automatic transmission unit 50. The ECU 2 performs the engine restart control automatically in response to satisfaction of the restart condition after stop of the engine. In this process, if the piston of the expansion-stroke cylinder is located at a position falling within the given adequate range around the stroke midpoint, the ECU 2 is operable to perform the operation for reverse engine rotation and then restart the engine.

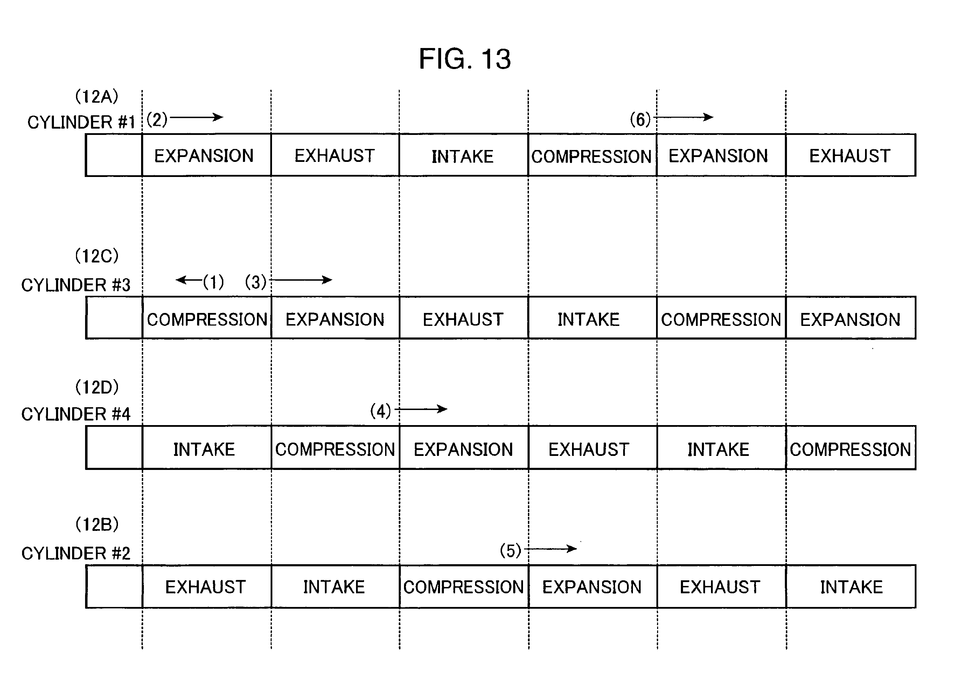

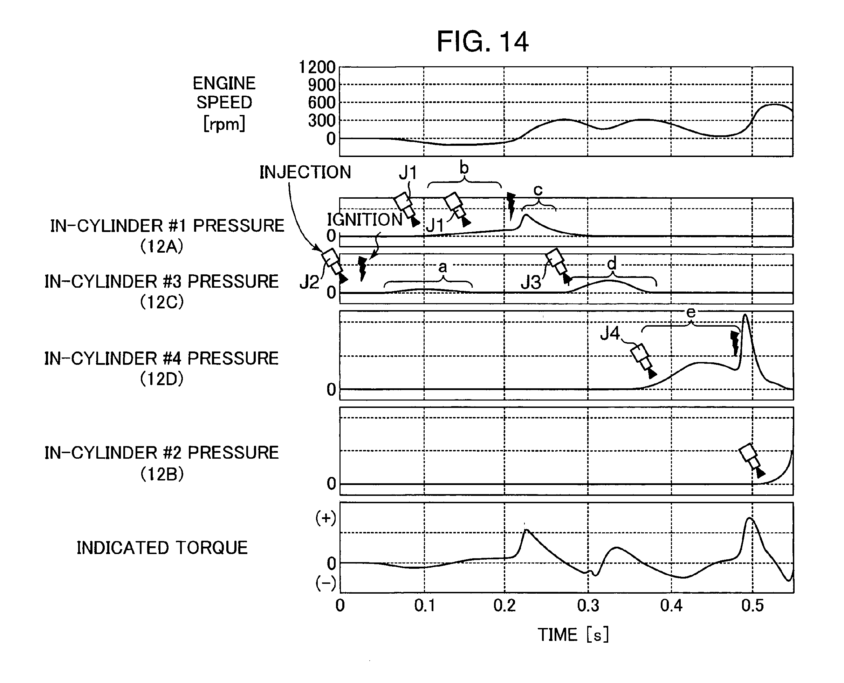

This engine restart control will be described based on the time charts in FIGS. 13 and 14. It is understood that the engine restart control for the engine starting system of the present invention is not limited to the following manner, but may be any other suitable conventional engine restart control.

As shown in FIGS. 13 and 14, a fuel injection J2 is firstly performed in a compression-stroke cylinder 12C (cylinder #3), and an obtained air-fuel mixture is ignited to perform combustion [(1) in FIG. 13]. A piston 13 of the compression-stroke cylinder 12C is pushed down toward the bottom dead center (BDC) by a combustion pressure [region "a" in FIG. 14] resulting from this combustion (1), and thereby the engine crankshaft is driven in the reverse rotation direction.

In conjunction with the above reverse engine rotation, the piston 13 of an expansion-stroke cylinder 12A (cylinder #1) starts being moved toward a top dead center (TDC). Then, when the piston 13 of the expansion-stroke cylinder 12A is moved to a position on the side of the TDC (preferably on the side of the TDC relative to the stroke midpoint), and air in the cylinder 12A is compressed, another fuel injection J1 is performed. Latent heat of vaporization of this injected fuel provides a reduced compression pressure to allow the piston 13 to be moved closer to the TDC, so that the density of the compressed air (air-fuel mixture) is increased [region "b" in FIG. 14].

When the piston 13 of the expansion-stroke cylinder 12A is moved sufficiently close to the TDC, the air-fuel mixture in the cylinder 12A is ignited to induce combustion of the injected fuel (J1) [(2) in FIG. 13], and the engine crankshaft is driven in a normal rotational direction by the resulting combustion pressure [region "c" in FIG. 14].

Further, a fuel injection (J3) is performed in the compression-stroke cylinder 12C at an appropriate timing to form an air-fuel mixture with a richer air-fuel ratio than a combustible air-fuel ratio [(3) in FIG. 13]. While this injected fuel is not burnt in the compression-stroke cylinder 12C, a compression pressure in the compression-stroke cylinder 12C is reduced by latent heat of vaporization of the injected fuel [region "d" in FIG. 14]. This makes it possible to reduce energy of the initial combustion in the expansion-stroke cylinder 12A which is to be consumed for passing through the compression TDC (first compression TDC after initiation of the restart control).

Furthermore, the timing of a fuel injection (J4) for an intake-stroke cylinder 12D in which the 2nd combustion will be performed is set at an adequate timing [e.g. after the intermediate phase of the compression stroke, as indicated by (4) in FIG. 13] for reducing an in-cylinder temperature and a compression pressure by means of latent heat of vaporization of the injected fuel. This prevents self-ignition which would otherwise occur before the compression TDC during the compression stroke of the intake-stroke cylinder 12D. In addition, an ignition timing in the intake-stroke cylinder 12D is set at the combustion TDC or later [region "e" in FIG. 14] to prevent occurrence of combustion before the combustion TDC. As above, the compression pressure is reduced based on the fuel injection (J4), and no combustion occurs before the compression TDC. This makes it possible to reduce energy of the initial combustion in the expansion-stroke cylinder 12A which is to be consumed for passing through the compression TDC (second compression TDC after initiation of the restart control).

In this manner, energy of the initial combustion [(2) in FIG. 13] in the expansion-stroke cylinder 12A allows the respective pistons of the compression-stroke and intake-stroke cylinders to pass through or be moved beyond the first compression TDC [(3) in FIG 13] and the second compression TDC [(4) in FIG. 13] so as to assure a smooth and reliable restart performance. Subsequently, the engine will resume a normal operation.

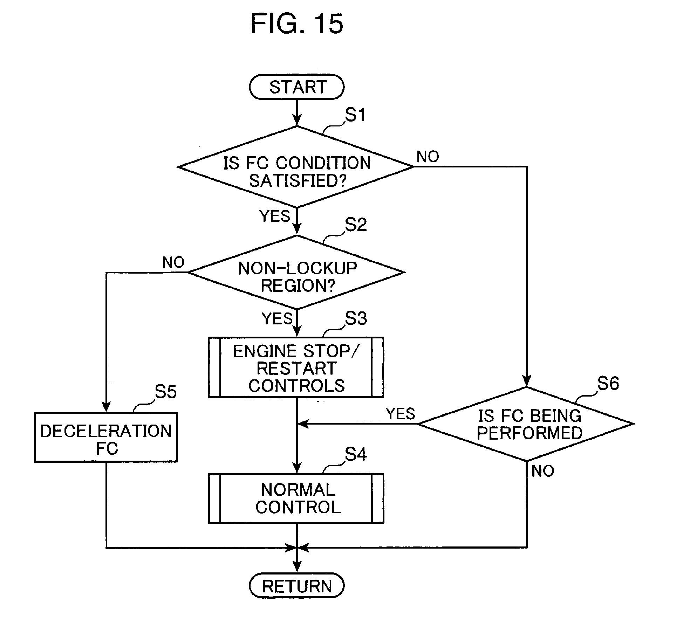

A control process for automatically stopping and restarting an engine according to the ECU 2 will be described based on the flowcharts illustrated in FIGS. 15 to 17.

FIG. 15 shows a main routine for the automatic engine stop and restart controls. When this control process is initiated, it is determined whether the condition of interrupting the fuel injection (hereinafter referred to as "FC condition") is satisfied (Step S1). In this embodiment, this FC condition is included in the automatic engine stop conditions, and also used as the condition for interrupting the fuel injection for a given time-period during a deceleration of the vehicle. Specifically, as the FC condition, it is determined whether the engine speed Ne is greater than a fuel-injection- interruption criterion value Nfc which is predetermined at about 1200 rpm, and whether the vehicle speed is equal to or greater than a predetermined value (e.g. 10 km/h) and the acceleration-pedal sensor 34 is in an OFF state.

When the determination in Step S1 is YES, it is determined whether a current vehicle running state is in a non-lockup range where the lockup clutch 64 of the torque converter 51 is released or disengaged, in accordance with a vehicle speed detected by the vehicle speed sensor 38 (Step S2). That is, the lockup clutch 64 of the torque converter 51 is designed to be engaged or disengaged in accordance with a signal generated from the ECU 2 depending on the vehicle speed, and, in a lockup range where the lockup clutch 64 is engaged, a sufficient fuel-consumption reduction effect can be obtained only by interrupting the fuel injection based on a conventional deceleration fuel-cut control which is commonly performed during deceleration of a vehicle,. From this view, this process fundamentally utilizes the fuel-injection interruption based on this deceleration fuel-cut control. Thus, the interruption of fuel injection for the automatic engine stop control is performed in a vehicle stop state, or in a specific vehicle deceleration state when conditions for performing the deceleration fuel-cut control are not satisfied. Further, when a current vehicle running state gets out of a lockup range during fuel injection interruption based on the deceleration fuel-cut control, this fuel injection interruption based on the deceleration fuel-cut control is used as the fuel injection interruption for the automatic engine stop control. Thus, the automatic engine stop conditions include the condition that a current vehicle running state is in the non-lockup state.

When the determination in Step S2 is YES, an automatic engine stop/restart control sub-routine is performed (Step S3). Then, a normal engine control is resumed after the engine is restarted (Step S4), and the process is returned. The automatic engine stop/restart control sub-routine will be described in detail later.

When the determination in Step S2 is NO, or it is determined that the lockup clutch 64 is in the engaged state, the conventional deceleration fuel-cut control (hereinafter referred to as "deceleration fuel cut") which is generally performed for a given time-period during deceleration of a vehicle is performed to interrupt the fuel injection to the cylinders 12 (Step S5), and then the process is returned. Even if the process is returned during the deceleration fuel cut, the after-mentioned automatic engine stop/restart controls utilizing the deceleration fuel cut will be performed when the FC condition is satisfied and the lockup clutch 64 is released or disengaged (YES in Steps S1 and S2), to provide enhanced fuel-consumption reduction effect.

When the determination in Step S1 is NO, or it is determined that the FC condition is not satisfied, it is determined whether the fuel injection interruption (FC) is being performed (Step S6). If the determination in Step S6 is NO, the process will be directly returned. When it is determined that the fuel injection interruption is being performed (YES in Step S6), the normal engine control is resumed or the fuel injection to the cylinders 12 is resumed (Step S4).

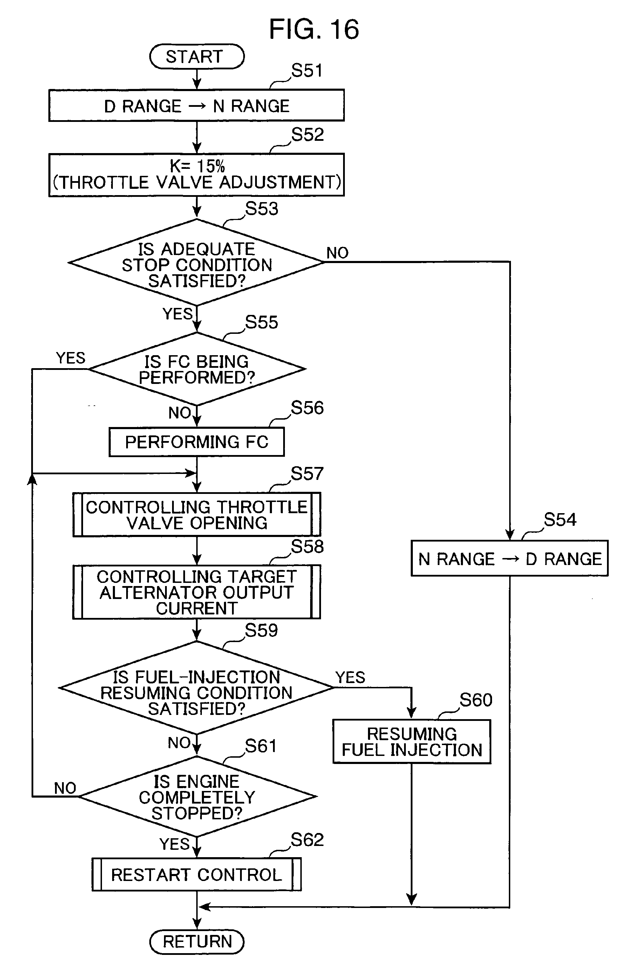

The automatic engine stop/restart controls performed in Step S3 of the flowchart in FIG. 15 will be described based on the flowchart in FIG. 16.

When a part of the automatic engine stop conditions are satisfied, in Steps S1 and S2 of the flowchart in FIG 15, the automatic engine stop/restart control subroutine is started. At Time T0 when a part of the automatic engine stop conditions is satisfied, the automatic transmission unit 50 is shifted from the drive mode to the neutral mode (Step S51). The neutral mode during the automatic engine control is placed in the aforementioned final pre-charged state. Specifically, the ECU 2 sends a signal to each of the solenoid valves 82 to 87 of the switching valve 91, the electric pump 62 and the oil-pressure control mechanism 63, to switch pumps for supplying an initial pressure to the oil-pressure mechanism 63, from the impeller oil pump 61 to the electric pump 62, and to shift each of the friction elements 67 to 71 in the disengaged state based on adjustment of the solenoid valves 82 to 87 or in the engaged state allowing a driving force to be transmitted therethrough, to the slip state where it is located at the contact position with no clearance but just before the engaged state allowing a driving force to be transmitted therethrough. That is, each of the friction elements 67 to 71 is shifted to the neutral mode and placed in the pre-charged state. Thus, this pre-charged neutral mode allows the transmission of a driving force including a reverse driving force to be cut off between the crankshaft 3 and the axles 78, 79, while standing ready to be quickly retuned to the engaged state. This makes it possible to provide enhanced response to a re-acceleration request, and stop the piston 13 within the given adequate range without adverse affects of a reverse driving force.

Then, the opening K of the throttle valve 23 is adjusted at 15% (Step S52) to stabilize the boost pressure Bt, and then it is determined whether a adequate-stop condition is satisfied, so as to check whether the automatic stop control can be adequately performed. This adequate-stop condition is provided as a means to conclusively check whether the automatic engine stop control for stopping the piston of the stopped-in-expansion-stroke cylinder 12A within the given adequate range can be performed, and included in the automatic engine stop conditions. Specifically, it is determined whether the engine speed Ne detected by the crank angle sensors 30, 31 falls within a given range allowing the automatic engine stop control to be achieved (e.g. in the range of 790 to 1200 rpm) and whether the boost pressure Bt detected by the intake pressure sensor 26 falls within a given range allowing the automatic engine stop control to be achieved (e.g. in the range of - 450 to - 300 mmHg). While the satisfaction of the adequate stop condition in this embodiment is determined by whether each of the engine speed Ne and the boost pressure Bt falls within the given range, it may be determined by whether either one of the engine speed Ne and the boost pressure Bt, preferably only the engine speed Ne, falls within the given range. In this case, a certain level of accuracy can be ensured.

When the determination in Step S53 is NO, or it is difficult to stop the stopped-in-expansion-stroke cylinder 12A within the given adequate range, the automatic transmission unit 50 is shifted from the neutral mode to the drive mode to resume the normal engine control (Step S54). In the state when the deceleration fuel-cut control is being performed in Step S5 of the flowchart in FIG. 15, the main routine can be shifted to Step S54 in the next process. In this case, after shifting the automatic transmission unit 50 to the drive mode in Step S54, this sub-routine is returned to Step S4, and Step S4 performs the normal engine control to resume the fuel injection.

When the determination in Step S53 is YES, it is determined whether the deceleration fuel-cut control is already being performed in Step S5 of the flowchart in FIG 15 (Step S55). If the deceleration fuel-cut control is not performed, the fuel injection to the cylinders 12 is interrupted at Time T1 when a given time has elapsed after the opening K of the throttle valve 23 is set at 15% (Step S56). If the determination in Step S55 is YES, Step S56 will be skipped. When the interruption of the fuel injection including Step S5 is performed, the ignition operation of the spark pugs 15 is interrupted at the time after the lapse of a predetermined time.

Then, the opening K of the throttle valve 23 is controlled in accordance with the engine speed Ne, the TDC engine speed ne, etc., (Step S57), to adjust a compressive reactive force due to air in the compression-stroke cylinder 12A and the expansion-stroke cylinder 12D in the state after stop of the engine, and the output current of the alternator 28 during the automatic engine stop control (Step S58) to finely adjust the engine speed through a resistance of the crankshaft 3. Through these operations, after Time T1 when the fuel injection is interrupted, the engine speed Ne is reduced along the reference curve obtained, for example, experimentally in advance, to allow the piston 13 to be stopped within the given adequate range.

One specific example of the above controls of the opening K of the throttle valve 23 and the target output current Ge of the alternator 28 will be described below. As to the control of the opening K of the throttle valve 23, at Time T1 of the fuel injection interruption, the throttle valve 23 is opened to set the opening K at a given value (e.g. 30%) greater than the aforementioned adjusted opening (15% in this embodiment). Then, it is determined whether the engine speed Ne becomes equal to or less than the predetermined reference speed N1 of about 790 rpm, so as to check whether the engine speed Ne starts lowering after Time T1 of the fuel injection interruption as shown in FIGS. 10 and 11. At Time T2 when it is determined that the engine speed Ne starts lowering, the throttle valve 23 is closed to set the opening K at zero %. Thus, the boost pressure Bt increased toward atmospheric pressure by opening the throttle valve 23 starts lowering in response to the closing operation of the throttle valve 23 with a given time lag due to movement of air from the throttle valve to the cylinders 12.

As to the target output current control of the alternator 28, at Time T1 of the fuel injection interruption, the target output current Ge of the alternator 28 is set at zero to stop the power generation. At Time T2 when the engine speed Ne is reduced to a value equal to or less than the predetermined reference speed N1 of about 790 rpm, the target output current Ge of the alternator 28 is set at a predetermined initial value of about 60 A to initiate a power generation control for operating the alternator 28. Thus, a given rotational resistance acts on the engine crankshaft 3. Then, at Time 3 when the TDC engine speed ne falls within an adequate control range, the target output current Ge of the alternator 28 is set at a value corresponding to the TDC engine speed ne. The adequate control range is determined based on the TDC engine speed ne at Time 3 when the piston 13 passes through the fourth compression TDC to the last compression TDC just before stop of the engine during the course where the engine speed Ne is lowered along a predetermined reference curve representing temporal changes in engine speed. Specifically, adequate control range is set in the range of 480 to 540 rpm. The target output current Ge of the alternator 28 corresponding to the TDC engine speed ne is determined based on a map stored in the ECU 2 and prepared to express the relationship between the TDC engine speed ne and the target output current Ge.

Concurrently with the controls of the opening K of the throttle valve 23 and the target output current Ge of the alternator 28 performed in accordance with the engine speed Ne, it is determined whether a fuel-injection resuming condition is satisfied, for example, whether the accelerator-pedal sensor 34 is turned on (Step S59). When the determination in Step S59 is YES, the fuel injection to the cylinders 12 is resumed (Step S60), and the sub-routine is returned to the main routine to resume the normal engine control in Step S4.

When the determination in Step S59 is NO, it is determined whether the engine is stopped (Step S61), and the Steps S57 to S59 will be repeatedly performed until the engine is stopped. When the determination in Step 61 is YES, the engine restart control is performed (Step S62), and the process is returned to the main routine illustrated in the flowchart of FIG 15.

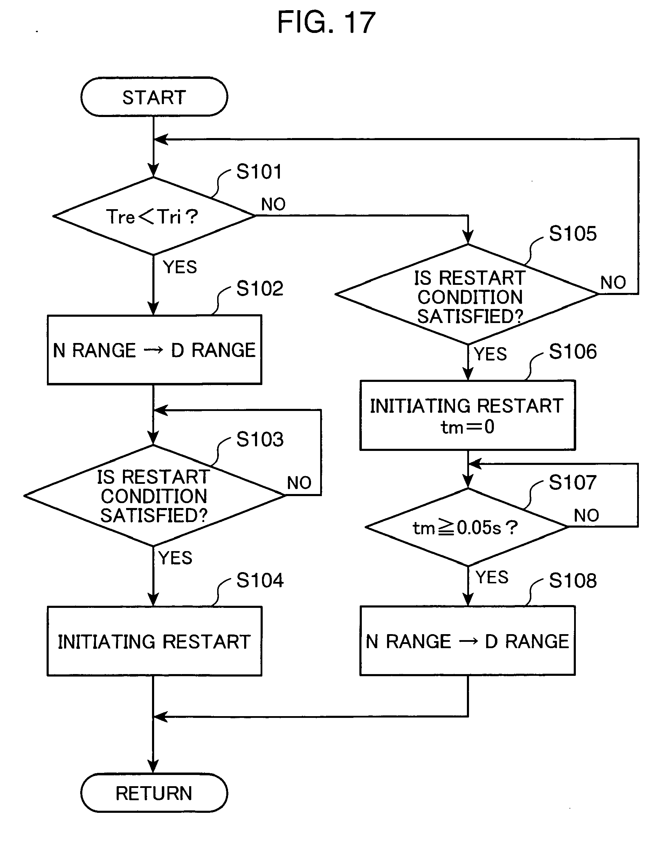

The engine restart control performed in Step S62 of the flowchart in FIG. 16 will be described based on the flowchart in FIG. 17.

When it is determined that the engine is completely stopped, in Step S61 of FIG 16, in advance of shift of the automatic transmission unit 50, the estimated turbine speed Tre is calculated by the ECU 2, and it is determined whether the estimated turbine speed Tre is less than the influential turbine speed Tri (Step S101). When the determination in Step 101 is YES, or no reverse driving force is transmitted from the turbine 55 of the converter 51 to the pump impeller 54 or there is not any risk that the crankshaft 3 is not rotationally driven by the reverse driving force, the automatic transmission unit 50 is shifted from the neutral mode to the drive mode (Step S102) to stand ready to cope with subsequent satisfaction of the restart condition. One or more of the friction elements 67 to 71 to be engaged in this drive mode is determined based on the map in FIG. 6 with reference to a vehicle speed detected by the vehicle speed sensor. In the above process of shifting the automatic transmission unit 50, it may be determined whether the piston 13 is displaced from the adequate range, in accordance with the crank angle sensors 30, 31. If it is determined that the piston is displaced, an after-mentioned starter motor may be used for assisting to restart the engine.

Then, it is determined whether any one of the engine restart conditions is satisfied (Step S103). If the determination in Step S103 is NO, the process waits until the restart condition is satisfied. When the determination in Step S103 is YES, for example, when an accelerator pedal is operated to accelerate the vehicle or when a buttery voltage becomes lower or when an air-conditioner is activated, the engine restart control is started (Step S104).

While this restart control is not limited to a specific manner, it may be designed as follows. An air volume of the stopped-in-compression-stroke cylinder 12C is calculated to inject a fuel so as to provide a rich air-fuel ratio, and then the obtained air-fuel mixture in the cylinder 12C is ignited after a lapse of a given time pre-determined in consideration of a time-period required for vaporization of the injected fuel. The ignition operation for the stopped-in-compression-stroke cylinder 12C will be repeatedly performed in accordance with detection of rising or falling edges of signals from the crank angle sensors 30, 31, until the engine is restarted. Thus, the engine reversely operates to increase the in-cylinder pressure of the stopped-in-compression-stroke cylinder 12C.

An air-fuel ratio relative to an air volume of the stopped-in-expansion-stroke cylinder 12A is determined based on a predetermined map, and a fuel is injected to provide the determined air-fuel ratio. Then, the obtained air-fuel mixture in the cylinder with an in-cylinder pressure increased by the reverse engine rotation is ignited. Thus, the engine starts operating in a normal direction.

Then, a given amount of fuel determined based on a predetermined map is injected into the compression-stroke cylinder 12C at a last phase of the stroke of the compression-stroke cylinder 12C to reduce a compressive reactive force around the compression TDC of the cylinder 12C by means of latent heat of vaporization of the injected fuel so as to allow the piston of the cylinder 12C to pass through the compression TDC. After this second combustion in the stopped-in-expansion-stroke cylinder 12C, a given amount of fuel is injected into the stopped-in-intake-stroke cylinder 12D whose piston will subsequently pass through the compression TDC, to provide a lean air-fuel ratio, and an obtained air-fuel mixture is ignited at a delayed timing set after the TDC. Then, the process is returned to the normal engine control in Step S4.

In Step S101, given the estimated turbine speed Tre is equal to or greater than the influential turbine speed Tri (NO in Step S101). In this case, if each of the friction elements 67 to 71 is placed in the engaged state, a reverse driving force will act on the pump impeller 54 from the turbine 55 of the converter 51 to cause movement of the piston 13. Thus, a standby state will be continued while checking satisfaction of the engine restart condition (Step S105), except that the restart condition is satisfied.

Then, when it is determined that the restart condition is satisfied, in Step S105, the engine restart control starts (Step S106) as described in connection with Step S104, and an elapsed time is counted using a timer incorporated in the ECU 2.

When a given time (e.g. 0.05 second) has been counted by the timer after the initial combustion in the stopped-in-compression-stroke cylinder 12C performed to cause the reverse engine rotation (Step S107), the shift signal for shifting from the neutral mode to the drive mode is sent to the automatic transmission unit 50 to allow the operation for shifting the automatic transmission unit 50 to be completed after the normal engine operation is resumed (Step S108), and then the process is returned. That is, the above given time is set in consideration of a time lag from a time when the automatic transmission unit 50 receives the shift signal until the operation for shifting to the drive mode allowing a driving force to be transmitted is actually completed. This timing of the completion of the shift operation is set at a time after completion of the operation for reverse engine rotation and before the compression TDC through which the piston of the stopped-in-intake stroke cylinder 12D first passes in the final phase of the engine restart control. Thus, based on the timer incorporated in the ECU 2, the automatic transmission unit 50 is shifted within in a period where a restarting state is instable or in a period from a time when the piston 13 is moved in the normal direction during the engine restart control, until the piston 13 of the stopped-in-intake stroke cylinder 12D first passes through the compression TDC. As above, the automatic transmission unit 50 is shifted after completion of the operation for reverse engine rotation. Thus, the operation for reverse engine rotation can be performed without interference of a reverse driving force from the axles 78, 79 to sufficiently increase the in-cylinder pressure of the stopped-in-expansion-stroke cylinder 12. In addition, the reverse driving force acts on the crankshaft 3 after the engine is operated in the normal direction. Thus, this reverse driving force can be utilized as a force for assisting the engine restart engine rotation in the period where a restarting state is instable, to reliably restart the engine.

As described above, the ECU 2 is operable, when the predetermined automatic engine stop conditions are satisfied during a vehicle running state, to shift the automatic transmission unit 50 from the drive mode to the neutral mode in the period after Time T0 of the satisfaction and before Time T1 of the fuel injection interruption (Time T0 when the automatic engine stop conditions are satisfied, in this embodiment), and when the engine is determined to be automatically stopped, in accordance with a detection result of the crank angle sensors 30, 31, and the estimated turbine speed Tre is determined to be less than the influential turbine speed Tri at or at greater than which a reverse driving force from the driven wheels causes rotation of the engine crankshaft 3, to shift the automatic transmission unit 50 from the neutral mode to the drive mode. Thus, even during a vehicle running state, the engine can be stopped within a given crank-angle range adequate for engine restarting by means of interruption of the fuel injection to the cylinders. In addition, the automatic transmission unit 50 can be shifted to the drive mode before satisfaction of the engine restart condition to stand ready to cope with satisfaction of the engine restart condition. This makes it possible to eliminate a time lag which would otherwise be caused by the shift operation of the automatic transmission unit 50 in response to satisfaction of the engine restart condition, such as a re-acceleration request, to provide enhanced response. Further, the timing of shifting the automatic transmission unit 50 to the drive mode in advance of satisfaction of the engine restart condition is set at a time when the estimated turbine speed Tre becomes less than the influential turbine speed Tri. This makes it possible to effectively prevent the stop position of the piston 13 from being moved in conjunction with the operation for shifting the automatic transmission unit 50, to maximally improve the response to the shift while desirably maintaining the restart performance.

The above engine starting system is only one embodiment of the present invention, and the disclosed specific structures and controls of the above engine starting system may be appropriately changed and modified without departing from the spirit and scope of the present invention. Some modifications will be described below.
(1) While the engine starting system according to the above embodiment is designed to operate the engine in a reverse rotational direction, and then operate the engine in a normal rotational direction, during the engine restart control, the restart control may be performed using only the operation for normal engine rotation. However, the operation for reverse engine rotation can advantageously provide increased combustion energy in the stopped-in-expansion-stroke cylinder 12A to reliably restart the engine.
(2) In cases where a piston stop position is not located within the given adequate range, or is located within the given adequate range but adjacent to the boundary of the given adequate range, or where the engine speed is not increased up to a given value even after a lapse of a given time after initiation of the restart control, or where the initial combustion is performed in the stopped-in-expansion-stroke cylinder without the operation for reverse engine rotation, a stator motor-based assist control may be employed, but not shown in the above embodiment. In this case, the load of the motor can be reduced by utilizing the combustion energy of the engine. Particularly, in this case, a fuel is preferably injected from a fuel injection valve directly to the cylinders during an intake stroke to allow the injected fuel to be sufficiently vaporized/atomized and mixed with air.
(3) While the engine starting system according to the above embodiment is designed to the automatic transmission unit 50 from the neutral mode to the drive mode when the estimated turbine speed Tre becomes less than the influential turbine speed Tri, the movement of the piston 13 during the shift operation may be monitored using the crank angle sensors 30, 31 or the like. If the movement of the piston 13 is detected, it is determined whether the piston 13 is located within the adequate range, and the starter motor may be used for assisting the restoring control according to need.
(4) While the engine starting system according to the above embodiment is designed to allow the automatic transmission unit 50 to be placed in the final pre-charged state during the automatic engine stop control, the automatic transmission unit 50 may be placed in the initial pre-charged state. Even in this case, the response after satisfaction of the engine restart condition can be enhanced as compared to the conventional system having no pre-charged state.
(5) While the engine starting system according to the above embodiment employs an in-cinder injection-type or direct-injection-type fuel injection valve 16, a port injection-type or manifold injection-type fuel injection valve may also be employed.
(6) While the influential turbine speed Tri in the above embodiment is experimentally obtained in advance, the value of the influential turbine speed Tri may be corrected in real time by an oil temperature, an engine temperature or the like.

Although the present invention has been described in terms of specific exemplary embodiments, it will be appreciated that various changes and modifications might be made by those skilled in the art without departing from the sprit and scope of the invention as set forth in the following claims.

## Claims

1. An engine starting system for a vehicle, including stop/restart control means operable, when an engine automatic stop condition, which can be satisfied even during a running state of the vehicle, is satisfied to interrupt fuel supply to an engine (1) so as to stop the engine within a given crank-angle range adequate for engine restarting, and, when an engine restart condition for restarting the engine in an automatically stopped state is satisfied, to perform combustion at least in one of cylinders (12) having a piston (13) in a state after being automatically stopped in an expansion stroke, so as to automatically restart the engine, said vehicle including an automatic transmission unit (50) provided with a torque converter (51) and designed to be selectively shifted between a drive mode for transmitting a driving force toward driven wheels and a neutral mode for cutting off the transmission of the driving force, said engine starting system is **characterized by**:
turbine-speed estimation means (2) for estimating a turbine speed (Tre) of a turbine (55) of said torque converter (51) which will occur when said automatic transmission unit currently in the neutral mode is shifted to the drive mode; and
engine-speed detection means (30,31) for detecting an engine speed of said engine, and
**characterized in that** said stop/restart control means is operable, when said automatic stop condition is satisfied during a running state of the vehicle, to shift said automatic transmission unit (50) from the drive mode to the neutral mode at a given time in a period after said satisfaction and before said interruption of the fuel supply, and, then when said engine is determined to be automatically stopped, in accordance with a detection result of said engine-speed detection means (30, 31), and the estimated turbine speed is determined to be less than a given influential turbine speed (Tri) at which a reverse driving force from driven wheels of the vehicle causes rotation of an engine crankshaft (3), in accordance with an estimation result of said turbine-speed estimation means (2), to shift said automatic transmission unit from the neutral mode to the drive mode.

2. The engine starting system according to claim 1, **characterized in that** said stop/restart control means is operable, when said restart condition is satisfied after said engine is determined to be automatically stopped, to perform combustion at least in one of the cylinders (12) having a piston (13) in a state after being automatically stopped in an expansion stroke, regardless of said estimated turbine speed (Tre), and then shift said automatic transmission unit (50) from the drive mode to the neutral mode.

3. The engine starting system according to claim 1 or 2, further comprising a start assist device designed to drive the engine crankshaft using a motor, wherein said stop/restart control means is operable, when said restart condition is satisfied, to activate said start assist device.

4. The engine starting system according to any one of claims 1 to 3, **characterized in that** said automatic transmission unit (50) includes a plurality of friction elements (67-71) each adapted to be selectively placed in an engaged or disengaged state according to a fluid pressure control, said automatic transmission unit (50) being designed to be selectively shifted between said drive mode and said neutral mode according to a combination of the states of said friction elements, wherein said stop/restart control means is operable to allow a fluid line connected to at least a given one of said friction elements to be charged with a working fluid up to a given fluid pressure, so as to create a pre-charged state in said neutral mode.

5. The engine starting system according to claim 4, **characterized in that** said pre-charged state includes an initial pre-charged state created by charging said fluid line with the working fluid, and a final pre-charged state created by, after said initial pre-charged state, further moving said given friction element from a disengagement position toward an engagement position so as to be located at a position just before said engagement position, wherein said automatic transmission unit shifted to the neutral mode by said stop/restart control means is in said final pre-charged state.
